(19) Europäisches Patentamt / European Patent Office / Office européen des brevets

(11) **EP 4 421 534 A1**

(12) **EUROPEAN PATENT APPLICATION**
published in accordance with Art. 153(4) EPC

(43) Date of publication:
**28.08.2024 Bulletin 2024/35**

(21) Application number: **21969514.5**

(22) Date of filing: **30.12.2021**

(51) International Patent Classification (IPC):
***G01S 19/37*** *(2010.01)*

(52) Cooperative Patent Classification (CPC):
**G01S 19/37**

(86) International application number:
**PCT/CN2021/142813**

(87) International publication number:
**WO 2023/123147 (06.07.2023 Gazette 2023/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **LI, Zongnan
  Changsha, Hunan 410000 (CN)**
• **LI, Min
  Wuhan, Hubei 430072 (CN)**
• **DONG, Guangli
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **DATA PREPROCESSING METHOD, DATA PREPROCESSING APPARATUS, AND CHIP**

(57) Embodiments of this application provide a data preprocessing method, a data preprocessing apparatus, and a chip. The method includes: obtaining satellite information, including a plurality of navigation satellite identifiers, and satellite data, observed values of an observation parameter, and weight values that are separately associated with the plurality of navigation satellite identifiers; determining that an inaccurate observed value exists in a set of the observed values of the observation parameter in the satellite information, and determining a check vector and a plurality of eigenvectors based on the satellite information, where the check vector represents accuracy of the set, and the eigenvector represents accuracy of an observed value of the observation parameter that is associated with a corresponding navigation satellite identifier; performing cluster analysis on the check vector and the plurality of eigenvectors, and determining, as a target navigation satellite identifier, a navigation satellite identifier corresponding to an eigenvector that is of a same type as the check vector; and performing selection in the plurality of navigation satellite identifiers and/or adjusting a weight value associated with the target navigation satellite identifier based on the target navigation satellite identifier. In this application, a plurality of inaccurate observed values can be simultaneously detected, and detection accuracy and detection efficiency are high.

FIG. 4

**Description**

**TECHNICAL FIELD**

This application relates to the field of satellite navigation technologies, and in particular, to a data preprocessing method, a data preprocessing apparatus, and a chip.

**BACKGROUND**

In recent years, global navigation satellite systems (global navigation satellite systems, GNSSs) have developed rapidly and are widely used. The BeiDou (BeiDou) satellite navigation system of China, the global positioning system (global positioning system, GPS) of the United States, the GLONASS (GLONASS) of Russia, and the Galileo (Galileo) system of Europe are referred to as four major GNSSs in the world.

Observation data preprocessing is an important basis and premise in GNSS data processing. The observation data preprocessing can detect a gross error or cycle slip in time and process the gross error or cycle slip properly, to avoid negative impact of the gross error or cycle slip on correctness of an adjustment result (namely, a weighted average value of all observed values). However, an existing observation data preprocessing solution cannot accurately find that a gross error or cycle slip exists in observation data, and consequently it is difficult to ensure validity of a processing result.

**SUMMARY**

Embodiments of this application provide a data preprocessing method, a data preprocessing apparatus, and a chip, to accurately find that a gross error or cycle slip exists in observation data, and therefore ensure validity of a processing result; and to detect a plurality of pieces of observation data having a gross error or cycle slip at a time, and therefore improve multi-dimensional gross error or cycle slip detection efficiency, that is, improve both accuracy and efficiency.

Therefore, embodiments of this application use the following technical solutions:

According to a first aspect, an embodiment of this application provides a data preprocessing method. The method includes performing at least one iteration, where each iteration includes: obtaining satellite information of a current iteration, where the satellite information includes a plurality of navigation satellite identifiers, and satellite data, observed values of an observation parameter, and weight values that are separately associated with the plurality of navigation satellite identifiers; when determining that an inaccurate observed value exists in a set of the observed values of the observation parameter that are separately associated with the plurality of navigation satellite identifiers in the satellite information of the current iteration, determining a check vector and a plurality of eigenvectors based on the satellite information of the current iteration, where the check vector represents accuracy of the set of the observed values of the observation parameter that are separately associated with the plurality of navigation satellite identifiers, the plurality of eigenvectors are in a one-to-one correspondence with the plurality of navigation satellite identifiers, and each eigenvector represents accuracy of an observed value of the observation parameter that is associated with a corresponding navigation satellite identifier; performing cluster analysis on the check vector and the plurality of eigenvectors, and determining, as a target navigation satellite identifier, a navigation satellite identifier corresponding to an eigenvector that is of a same type as the check vector, where an observed value of the observation parameter that is associated with the target navigation satellite identifier is inaccurate; and performing selection in the plurality of navigation satellite identifiers in the satellite information of the current iteration and/or adjusting a weight value associated with the target navigation satellite identifier in the satellite information based on the target navigation satellite identifier.

In the foregoing solution, a probability that a gross error/cycle slip occurs in each observed value may be quantitatively described based on the satellite data, the observed values of the observation parameter, and the weight values in the satellite information according to a fuzzy cluster analysis method, for example, a fuzzy mean algorithm. In addition, because the satellite data includes three-dimensional coordinates of each satellite, satellite geometric distribution can be fully used. This not only avoids a determining rule of "black or white/one or the other" in a conventional method and a problem of a determining result difference caused by different thresholds, but also can provide a reference and an idea for weight value setting of a navigation satellite based on a probability value, that is, weight value setting that considers uncertainty between good and bad of an observed value of the navigation satellite. In addition, one or more navigation satellites whose observed values are inaccurate can be detected in each iteration, so that a multi-dimensional gross error or cycle slip detection success rate is improved, and validity of a processing result is ensured.

In a possible implementation, when the current iteration is the $1^{st}$ iteration, the satellite information of the current iteration is originally obtained satellite information, and the originally obtained satellite information includes a plurality of navigation satellite identifiers, and satellite data, observed values of the observation parameter, and weight values that are separately associated with the plurality of navigation satellite identifiers; and when the current iteration is an $N^{th}$

iteration and N is a positive integer greater than or equal to 2, the satellite information of the current iteration is satellite information obtained after a previous iteration, and satellite data and an observed value of the observation parameter that are associated with a same navigation satellite identifier remain unchanged in an iteration process.

In a possible implementation, the determining a check vector and a plurality of eigenvectors based on the satellite information of the current iteration includes: determining, based on the satellite information of the current iteration, residuals of the observation parameter that are separately associated with the plurality of navigation satellite identifiers in the satellite information of the current iteration; and determining the check vector and the plurality of eigenvectors based on a coefficient matrix of an observation equation of the observation parameter and the residuals of the observation parameter that are separately associated with the plurality of navigation satellite identifiers.

In other words, in this implementation, samples may be constructed based on the residuals of the observation parameter and the coefficient matrix of the observation equation, to obtain the check vector and the plurality of eigenvectors. The residual may reflect a difference between an actual observed value and an estimated value. In addition, coordinate locations of satellites are used in a residual calculation process, and the coordinate locations of the satellites are also used in the coefficient matrix of the observation equation. In this way, the satellite geometric distribution can be fully used, to improve accuracy of finding observation data having a gross error or cycle slip, and therefore ensure the validity of the processing result.

In a possible implementation, the determining the check vector and the plurality of eigenvectors based on a coefficient matrix of an observation equation of the observation parameter and the residuals of the observation parameter that are separately associated with the plurality of navigation satellite identifiers includes: performing QR decomposition on the coefficient matrix $A_{n \times k}$ of the observation equation of the observation parameter to obtain a matrix $Q_{n \times n}$, where $A_{n \times k} = Q_{n \times n} \times R_{n \times k}$, n is a quantity of the plurality of navigation satellite identifiers, and k is a quantity of unknown numbers in the observation equation of the observation parameter; selecting a $(k+1)^{th}$ row to an $n^{th}$ row of a matrix $Q^T$ to form a submatrix $T_{(n-k) \times n}$; for each of the plurality of navigation satellite identifiers, multiplying each column of the submatrix $T_{(n-k) \times n}$ by a residual of the observation parameter that is associated with the corresponding navigation satellite identifier in sequence to obtain an eigenvector corresponding to the navigation satellite identifier; and multiplying the submatrix $T_{(n-k) \times n}$ by a residual vector of the observation parameter to obtain the check vector, where the residual vector of the observation parameter is a column vector formed by sequentially arranging the residuals of the observation parameter that are associated with the plurality of navigation satellite identifiers.

In other words, in this implementation, the QR decomposition may be first performed on the coefficient matrix, and then several rows corresponding to subsequent redundant observation parameters are selected from the transposed matrix $Q^T$ of the matrix $Q_{n \times n}$ to form the submatrix $T_{(n-k) \times n}$. In this way, a quantity n of columns of the submatrix $T_{(n-k) \times n}$ is the same as the quantity of the plurality of navigation satellite identifiers, and a quantity of rows is a quantity of the redundant observation parameters. Then, a residual of the observation parameter that is associated with the $1^{st}$ navigation satellite identifier may be multiplied by the $1^{st}$ column of the submatrix $T_{(n-k) \times n}$, to obtain the $1^{st}$ eigenvector representing accuracy of an observed value of the observation parameter that is associated with the $1^{st}$ navigation satellite identifier. A residual of the observation parameter that is associated with the $2^{nd}$ navigation satellite identifier may be multiplied by the $2^{nd}$ column of the submatrix $T_{(n-k) \times n}$, to obtain the $2^{nd}$ eigenvector representing accuracy of an observed value of the observation parameter that is associated with the $2^{nd}$ navigation satellite identifier. By analogy, a residual of the observation parameter that is associated with the $n^{th}$ navigation satellite identifier may be multiplied by the $n^{th}$ column of the submatrix $T_{(n-k) \times n}$, to obtain the $n^{th}$ eigenvector representing accuracy of an observed value of the observation parameter that is associated with the $n^{th}$ navigation satellite identifier. The check vector may be obtained by multiplying the submatrix $T_{(n-k) \times n}$ by the residual vector formed by the residuals of the observation parameter that are associated with the plurality of navigation satellite identifiers. It may be understood that the eigenvectors and the check vector may alternatively be obtained in another manner, provided that the eigenvector can represent the accuracy of the observed value of the observation parameter that is associated with the corresponding navigation satellite identifier, and the check vector can represent the accuracy of the set of the observed values of the observation parameter that are associated with the plurality of navigation satellite identifiers.

In a possible implementation, the performing cluster analysis on the check vector and the plurality of eigenvectors, and determining, as a target navigation satellite identifier, a navigation satellite identifier corresponding to an eigenvector that is of a same type as the check vector includes: determining that a part of the plurality of eigenvectors is of a first type and the other part of the plurality of eigenvectors is of a second type; determining, when the check vector is of the first type, that the first type is a type indicating an inaccurate observed value and the second type is a type indicating an accurate observed value; and determining, as the target navigation satellite identifier, a navigation satellite identifier of the first type.

In other words, the cluster analysis may be performed on a plurality of vectors by using a cluster analysis algorithm, and the plurality of vectors are classified into the first type and the second type. The plurality of vectors include the check vector and the plurality of eigenvectors, in other words, both the check vector and the eigenvectors are classification objects. In addition, the two types obtained through classification by using the cluster analysis algorithm are unknown, in other words, in this case, it is not determined which one of the first type and the second type is the type indicating an inaccurate observed value. However, the check vector represents the accuracy of the set of the observed values, and the cluster analysis is performed only when an inaccurate observed value exists in the set of the observed values, that is, the check vector is of the type indicating an inaccurate observed value. Therefore, if it is determined after the cluster analysis that the check vector is of the first type, the first type is the type indicating an inaccurate observed value. In this case, a navigation satellite identifier corresponding to each eigenvector of the first type may be determined as the target navigation satellite identifier. In other words, for each of the plurality of eigenvectors, if a type of the eigenvector is the same as a type of the check vector, a navigation satellite identifier corresponding to the eigenvector may be used as the target navigation satellite identifier.

In a possible implementation, the determining, when the check vector is of the first type, that the first type is a type indicating an inaccurate observed value and the second type is a type indicating an accurate observed value includes: determining a first membership degree value corresponding to the first type and a second membership degree value corresponding to the second type that are of the check vector; and when the first membership degree value is greater than the second membership degree value, determining that the first type is the type indicating an inaccurate observed value and the second type is the type indicating an accurate observed value.

In other words, in this implementation, after the cluster analysis is performed on the check vector and the plurality of eigenvectors by using the cluster analysis algorithm, two membership degree values of the check vector may be obtained, to be specific, the first membership degree value corresponding to the first type and the second membership degree value corresponding to the second type may be obtained. The first membership degree value indicates a probability of being of the first type, the second membership degree value indicates a probability of being of the second type, and a sum of the first membership degree value and the second membership degree value need to be 1. For example, if a value of one is 1, a value of the other one need to be 0. Then, the first membership degree value is compared with the second membership degree value, where a type corresponding to a larger value is the type indicating an inaccurate observed value, and a type corresponding to a smaller value is the type indicating an accurate observed value.

In a possible implementation, the determining that a part of the plurality of eigenvectors is of a first type and the other part of the plurality of eigenvectors is of a second type includes: for each of the plurality of eigenvectors, determining a third membership degree value corresponding to the first type and a fourth membership degree value corresponding to the second type that are of the eigenvector, and determining, based on the third membership degree value and the fourth membership degree value, that the eigenvector is of the first type or the second type.

In other words, in this implementation, after the cluster analysis is performed on the eigenvectors and the check vector by using the cluster analysis algorithm, two membership degree values of the eigenvector may be obtained, to be specific, the third membership degree value corresponding to the first type and the fourth membership degree value corresponding to the second type may be obtained. The third membership degree value indicates a probability of being of the first type, the fourth membership degree value indicates a probability of being of the second type, and a sum of the third membership degree value and the fourth membership degree value need to be 1. Then, a type of the eigenvector may be determined based on the third membership degree value and the fourth membership degree value.

In a possible implementation, the determining, based on the third membership degree value and the fourth membership degree value, that the eigenvector is of the first type or the second type includes: when the third membership degree value is greater than or equal to the fourth membership degree value, determining that the eigenvector is of the first type; and when the third membership degree value is less than the fourth membership degree value, determining that the eigenvector is of the second type; or when the third membership degree value is greater than or equal to a first specified threshold, determining that the eigenvector is of the first type; and when the third membership degree value is less than the first specified threshold, determining that the eigenvector is of the second type; or when the fourth membership degree value is less than a second specified threshold, determining that the eigenvector is of the first type; and when the fourth membership degree value is greater than or equal to the second specified threshold, determining that the eigenvector is of the second type.

In other words, in this implementation, there are the following two processing manners for determining the type of the eigenvector: In a first manner, the third membership degree value is compared with the fourth membership degree value. In a second manner, the third membership degree value or the fourth membership degree value is compared with a specified threshold. The first manner is easy to implement, because as long as the two membership degree values are not equal, in other words, one is greater than the other, a type corresponding to a larger one is the type of the eigenvector. The second manner is flexible, because a value of the specified threshold may be set based on a requirement. For example, the specified threshold may be 0.6, 0.7, or the like. In this way, detection accuracy can be improved based on the requirement. For example, it is known that the first type is the type indicating an inaccurate observed value. It is assumed that the third membership degree value corresponding to the first type is 0.4, and the fourth membership degree value corresponding to the second type is 0.6. In the first manner, the eigenvector is of the second type, namely, the type indicating an accurate observed value. In the second manner, assuming that the second specified threshold is 0.7 (and the first specified threshold is 0.3), because the fourth membership degree value 0.6 is less than the second specified threshold 0.7 (and the third membership degree value 0.4 is greater than the first specified threshold 0.3), the eigenvector is of the first type, namely, the type indicating an inaccurate observed value. In other words, only when the fourth membership degree value is greater than or equal to 0.7, the eigenvector is of the second type, namely, the type indicating an accurate observed value. In addition, the first manner may also be considered as a case in which the specified threshold in the second manner is 0.5.

In a possible implementation, the determining that an inaccurate observed value exists in a set of the observed values of the observation parameter that are separately of the plurality of navigation satellite identifiers includes: determining measurement errors of the observation parameter that are separately associated with the plurality of navigation satellite identifiers; determining, based on the residuals of the observation parameter that are separately associated with the plurality of navigation satellite identifiers and the measurement errors, posterior unit weighted errors of the observation parameter that are separately associated with the plurality of navigation satellite identifiers; and determining, based on the posterior unit weighted errors, that an inaccurate observed value exists in the set of the observed values of the observation parameter that are separately associated with the plurality of navigation satellite identifiers.

In other words, in this implementation, whether an inaccurate observed value exists in the set of the observed values of the observation parameter that are separately associated with the plurality of navigation satellite identifiers may be determined based on the posterior unit weighted errors. It may be understood that, whether an inaccurate observed value exists in the set of the observed values of the observation parameter may alternatively be determined in another manner.

In a possible implementation, for a same navigation satellite identifier: when the 1st iteration is performed, a measurement error of the observation parameter that is associated with each of the plurality of navigation satellite

$$\sigma_i = \frac{\sigma_0}{\sin(ele)}$$

identifiers is $\sigma_i$, where $\sigma_i = \sigma_0$ or , and an associated weight value is a reciprocal of the associated measurement error of the observation parameter; and when the $N^{th}$ iteration is performed and N is a positive integer greater than or equal to 2, when the associated weight value is adjusted in a previous iteration process, the associated measurement error of the observation parameter is correspondingly adjusted based on a function relationship, where the function relationship is that the associated weight value is a reciprocal of the associated measurement error of the observation parameter, where $\sigma_0$ represents a measurement error standard deviation of the observation parameter, sin represents a sine function, and *ele* represents an altitude angle of a navigation satellite with a unit of rad.

In other words, in this implementation, when the 1st iteration is performed, the measurement error may be usually directly set based on experience. Therefore, it may be considered that the measurement error is known, and then the weight value may be obtained based on a reciprocal relationship between the weight value and the measurement error. However, in the 2nd and subsequent iteration processes, after the weight value associated with the target navigation satellite identifier is adjusted, the measurement error may be re-determined based on an adjusted weight value, in other words, the weight value is first adjusted, and then the measurement error is determined based on the adjusted weight value. The measurement error changes with the weight value.

In a possible implementation, the determining, based on the posterior unit weighted errors, that an inaccurate observed value exists in the set of the observed values of the observation parameter that are separately associated with the plurality of navigation satellite identifiers includes: performing a chi-square test on the posterior unit weighted errors of the observation parameter; and when the chi-square test fails, determining that an inaccurate observed value exists in the set of the observed values of the observation parameter that are separately associated with the plurality of navigation satellite identifiers.

In other words, in this implementation, the chi-square test may be performed on the posterior unit weighted errors, to determine whether an inaccurate observed value exists in the set of the observed values of the observation parameter. It may be understood that the posterior unit weighted errors may alternatively be checked in another manner, to determine whether an inaccurate observed value exists in the set of the observed values of the observation parameter.

In a possible implementation, the method further includes: when the chi-square test succeeds, determining that the observed values of the observation parameter that are separately associated with the plurality of navigation satellite identifiers are all accurate, stopping iteration, and determining satellite information obtained after a previous iteration as valid data.

In other words, in this implementation, a condition for stopping iteration is that the chi-square test succeeds. Optionally, it may alternatively be set, based on a requirement, that the iteration is stopped when another condition is met, for example, when a quantity of iterations reaches a specified quantity, or the quantity of the plurality of navigation satellite identifiers participating in the current iteration is less than or equal to a specified threshold.

In a possible implementation, the performing a chi-square test on the posterior unit weighted errors of the observation parameter includes: using a redundant observation parameter as a degree of freedom, where the redundant observation parameter is the quantity of the plurality of navigation satellite identifiers minus the quantity of unknown parameters in the observation equation of the observation parameter; determining a confidence level based on the observation parameter; querying a chi-square distribution table based on the degree of freedom and the confidence level, to determine a theoretical value of the chi-square test; and determining whether the chi-square test succeeds based on a comparison result between the posterior unit weighted errors and the theoretical value.

In other words, in this implementation, the redundant observation parameter may be used as the degree of freedom k, and the confidence level may be determined based on the observation parameter. A sum of a P value and the confidence level is 1, so that the P value may be determined based on the determined confidence level. A longitudinal parameter of the chi-square table is the degree of freedom k, and a horizontal parameter is the P value. The theoretical value may be obtained by querying the chi-square table based on the determined degree of freedom k and P value. Then, the posterior unit weighted error is compared with the theoretical value. If the posterior unit weighted error is less than or equal to the theoretical value, the chi-square test succeeds. If the posterior unit weighted error is greater than the theoretical value, the chi-square test fails.

In a possible implementation, the data preprocessing method further includes: stopping iteration when determining that a quantity of iterations reaches a specified quantity or determining that a quantity of a plurality of navigation satellite identifiers in satellite information obtained after the current iteration is less than or equal to a specified threshold; and determining the satellite information obtained after the current iteration as valid data.

In other words, in this implementation, a condition for stopping iteration may be set based on a requirement. For example, the iteration is stopped when the quantity of iterations reaches the specified quantity. In this way, both time and accuracy of the iteration can be considered. Alternatively, the iteration is stopped when a quantity of navigation satellite identifiers is less than or equal to the specified threshold. In this way, it can be ensured that a quantity of remaining navigation satellite identifiers meets a subsequent working requirement.

In a possible implementation, the determining, based on the satellite information of the current iteration, residuals of the observation parameter that are separately associated with the plurality of navigation satellite identifiers includes: determining a positioning solution result based on the observation equation of the observation parameter and the satellite information of the current iteration; and for each of the plurality of navigation satellite identifiers: determining, based on the positioning solution result, the observation equation of the observation parameter, and satellite data associated with the navigation satellite identifier, a theoretical calculated value of the observation parameter that is associated with the navigation satellite identifier; and using a difference between an observed value of the observation parameter and the theoretical calculated value of the observation parameter as a residual of the observation parameter that is associated with the navigation satellite identifier.

In other words, in this implementation, positioning solution may be first performed to determine a three-dimensional coordinate location and a clock difference of a receiver, and then the theoretical calculated value of the observation parameter may be calculated based on data such as the three-dimensional coordinate location and the clock difference of the receiver. The observed value of the observation parameter may be obtained in another manner, in other words, the observed value of the observation parameter is known. Then, the difference between the observed value of the observation parameter and the theoretical calculated value of the observation parameter is the residual.

In a possible implementation, the observation parameter is a pseudo-range, and the determining a positioning solution result based on the observation equation of the observation parameter and the satellite information includes: expanding a pseudo-range observation equation into a linearized form by using Taylor series; and determining the positioning solution result based on the linearized pseudo-range observation equation and the satellite information by using a weighted least square method.

In other words, in this implementation, because the pseudo-range observation equation is a non-linear equation, and the weighted least square method is used to solve a linear equation set, before the weighted least square method is used to perform positioning solution, the pseudo-range observation equation needs to be first expanded into the linearized form by using Taylor series.

In a possible implementation, the observation parameter is a carrier phase, and the determining a positioning solution result based on the observation equation of the observation parameter and the satellite information includes: performing a subtraction operation on a carrier observation equation of a current epoch and a carrier observation equation of a previous epoch to obtain an inter-epoch single-difference carrier observation equation; performing linearization processing on the inter-epoch single-difference carrier observation equation; and determining the positioning solution result based on the linearized inter-epoch single-difference carrier observation equation and the satellite information by using a weighted least square method.

In other words, in this implementation, because the carrier observation equation is a non-linear equation, and the weighted least square method is used to solve a linear equation set, before the weighted least square method is used to perform positioning solution, the linearization processing needs to be first performed on the carrier observation equation.

In a possible implementation, the observation parameter is a pseudo-range, that an observed value of the observation parameter is inaccurate includes that a gross error exists in an observed value of the pseudo-range, and that an observed value of the observation parameter is accurate includes that no gross error exists in an observed value of the pseudo-range; and/or the observation parameter is a carrier phase, that an observed value of the observation parameter is inaccurate includes that a cycle slip exists in an observed value of the carrier phase, and that an observed value of the observation parameter is accurate includes that no cycle slip exists in an observed value of the carrier phase.

In other words, in this implementation, that an observed value of the pseudo-range is inaccurate means that a gross error exists in the observed value of the pseudo-range, and that an observed value of the pseudo-range is accurate means that no gross error exists in the observed value of the pseudo-range. That an observed value of the carrier phase is inaccurate means that a cycle slip exists in the observed value of the carrier phase, and that an observed value of the carrier phase is accurate means that no cycle slip exists in the observed value of the carrier phase.

In a possible implementation, the performing selection in the plurality of navigation satellite identifiers in the satellite information of the current iteration and/or adjusting a weight value associated with the target navigation satellite identifier in the satellite information based on the target navigation satellite identifier includes: removing the target navigation satellite identifier from the plurality of navigation satellite identifiers in the satellite information of the current iteration; reducing the weight value of the target navigation satellite identifier in the plurality of navigation satellite identifiers in the satellite information of the current iteration; or when there are more than two target navigation satellite identifiers, removing a part of target navigation satellite identifiers from the plurality of navigation satellite identifiers in the satellite information of the current iteration, and reducing weight values of the other part of target navigation satellite identifiers in the plurality of navigation satellite identifiers in the satellite information of the current iteration.

In other words, in this implementation, compared with the obtained satellite information of the current iteration, a quantity of navigation satellite identifiers in the satellite information obtained after the current iteration is reduced (where the target navigation satellite identifier is removed), and weight values separately associated with remaining navigation satellite identifiers remain unchanged; or a quantity of navigation satellite identifiers obtained after the current iteration remains unchanged, but the weight value associated with the target navigation satellite identifier is reduced; or a quantity of navigation satellite identifiers in the satellite information obtained after the current iteration is reduced, to be specific, a part of target navigation satellite identifiers are removed, and the other part of target navigation satellite identifiers are retained and weight values separately associated with the part of target navigation satellite identifiers are reduced.

In a possible implementation, the observed value of the observation parameter is single-frequency data; and/or the satellite data includes three-dimensional coordinates and positioning error data of a navigation satellite indicated by the navigation satellite identifier.

In other words, in this implementation, data such as the observed value of the observation parameter is single-frequency data, so that a single-frequency receiver can be used. In addition, each time when data of different frequencies are used to repeatedly perform the method, multi-frequency data detection can be implemented. Therefore, the method can be universally used for gross error identification and cycle slip detection of single-frequency/multi-frequency GNSS observation data, can provide reliable services for single-frequency/multi-frequency users, and can resolve a problem of single applicability of an existing method (applicable only to dual-frequency data).

According to a second aspect, an embodiment of this application provides a data preprocessing apparatus. The data preprocessing apparatus can perform at least one iteration, and includes: an obtaining module, configured to obtain satellite information of a current iteration, where the satellite information includes a plurality of navigation satellite identifiers, and satellite data, observed values of an observation parameter, and weight values that are separately associated with the plurality of navigation satellite identifiers; a first determining module, configured to determine, based on the satellite information of the current iteration, whether an inaccurate observed value exists in a set of the observed values of the observation parameter that are separately associated with the plurality of navigation satellite identifiers in the satellite information of the current iteration; a second determining module, configured to: when a determining result of the first determining module is Yes, determine a check vector and a plurality of eigenvectors based on the satellite information of the current iteration, where the check vector represents accuracy of the set of the observed values of the observation parameter that are separately associated with the plurality of navigation satellite identifiers, the plurality of eigenvectors are in a one-to-one correspondence with the plurality of navigation satellite identifiers, and each eigenvector represents accuracy of an observed value of the observation parameter that is associated with a corresponding navigation satellite identifier; a third determining module, configured to: perform cluster analysis on the check vector and the plurality of eigenvectors, and determine, as a target navigation satellite identifier, a navigation satellite identifier corresponding to an eigenvector that is of a same type as the check vector, where an observed value of the observation parameter that is associated with the target navigation satellite identifier is inaccurate; and a fourth determining module, configured to perform selection in the plurality of navigation satellite identifiers in the satellite information of the current iteration and/or adjust a weight value associated with the target navigation satellite identifier in the satellite information based on the target navigation satellite identifier.

In a possible implementation, when the current iteration is the 1st iteration, the satellite information of the current iteration is originally obtained satellite information, and the originally obtained satellite information includes a plurality of navigation satellite identifiers, and satellite data, observed values of the observation parameter, and weight values that are separately associated with the plurality of navigation satellite identifiers; and when the current iteration is an $N^{th}$ iteration and N is a positive integer greater than or equal to 2, the satellite information of the current iteration is satellite information obtained after a previous iteration, and satellite data and an observed value of the observation parameter that are associated with a same navigation satellite identifier remain unchanged in an iteration process.

In a possible implementation, the second determining module includes: a fourth determining unit, configured to determine based on the satellite information of the current iteration, residuals of the observation parameter that are separately associated with the plurality of navigation satellite identifiers in the satellite information of the current iteration; and a fifth determining unit, configured to determine the check vector and the plurality of eigenvectors based on a coefficient matrix of an observation equation of the observation parameter and the residuals of the observation parameter that are separately associated with the plurality of navigation satellite identifiers.

In a possible implementation, when determining the check vector and the plurality of eigenvectors based on the coefficient matrix of the observation equation of the observation parameter and the residuals of the observation parameter that are separately associated with the plurality of navigation satellite identifiers, the fifth determining unit is specifically configured to: perform QR decomposition on the coefficient matrix $A_{n \times k}$ of the observation equation of the observation parameter to obtain a matrix $Q_{n \times n}$, where $A_{n \times k} = Q_{n \times n} \times R_{n \times k}$, n is a quantity of the plurality of navigation satellite identifiers, and k is a quantity of unknown numbers in the observation equation of the observation parameter; select a $(k+1)^{th}$ row to an $n^{th}$ row of a matrix $Q^T$ to form a submatrix $T_{(n-k) \times n}$; for each of the plurality of navigation satellite identifiers, multiply each column of the submatrix $T_{(n-k) \times n}$ by a residual of the observation parameter that is associated with the corresponding navigation satellite identifier in sequence to obtain an eigenvector corresponding to the navigation satellite identifier; and multiply the submatrix $T_{(n-k) \times n}$ by a residual vector of the observation parameter to obtain the check vector, where the residual vector of the observation parameter is a column vector formed by sequentially arranging the residuals of the observation parameter that are associated with the plurality of navigation satellite identifiers.

In a possible implementation, the third determining module includes: a sixth determining unit, configured to determine that a part of the plurality of eigenvectors is of a first type and the other part of the plurality of eigenvectors is of a second type; a seventh determining unit, configured to determine, when the check vector is of the first type, that the first type is a type indicating an inaccurate observed value and the second type is a type indicating an accurate observed value; and an eighth determining unit, configured to determine, as the target navigation satellite identifier, a navigation satellite identifier corresponding to each eigenvector of the first type.

In a possible implementation, when determining that the first type is the type indicating an inaccurate observed value and the second type is the type indicating an accurate observed value, the seventh determining unit is specifically configured to: determine a first membership degree value corresponding to the first type and a second membership degree value corresponding to the second type that are of the check vector; and when the first membership degree value is greater than the second membership degree value, determine that the first type is the type indicating an inaccurate observed value and the second type is the type indicating an accurate observed value.

In a possible implementation, when determining that the part of the plurality of eigenvectors is of the first type and the other part of the plurality of eigenvectors is of the second type, the sixth determining unit is specifically configured to: for each of the plurality of eigenvectors, determine a third membership degree value corresponding to the first type and a fourth membership degree value corresponding to the second type that are of the eigenvector, and determine, based on the third membership degree value and the fourth membership degree value, that the eigenvector is of the first type or the second type.

In a possible implementation, when determining, based on the third membership degree value and the fourth membership degree value, that the eigenvector is of the first type or the second type, the sixth determining unit is specifically configured to: when the third membership degree value is greater than or equal to the fourth membership degree value, determine that the eigenvector is of the first type; and when the third membership degree value is less than the fourth membership degree value, determine that the eigenvector is of the second type; or when the third membership degree value is greater than or equal to a first specified threshold, determine that the eigenvector is of the first type; and when the third membership degree value is less than the first specified threshold, determine that the eigenvector is of the second type; or when the fourth membership degree value is less than a second specified threshold, determine that the eigenvector is of the first type; and when the fourth membership degree value is greater than or equal to the second specified threshold, determine that the eigenvector is of the second type.

In a possible implementation, the first determining module includes: a first determining unit, configured to determine measurement errors of the observation parameter that are separately associated with the plurality of navigation satellite identifiers; a second determining unit, configured to determine, based on the residuals of the observation parameter that are separately associated with the plurality of navigation satellite identifiers and the measurement errors, posterior unit weighted errors of the observation parameter that are separately associated with the plurality of navigation satellite identifiers; and a third determining unit, configured to determine, based on the posterior unit weighted errors, that an inaccurate observed value exists in the set of the observed values of the observation parameter that are separately associated with the plurality of navigation satellite identifiers.

In a possible implementation, for a same navigation satellite identifier: when the 1st iteration is performed, a measurement error of the observation parameter that is associated with each of the plurality of navigation satellite identifiers is $\sigma_i$, where $\sigma_i = \sigma_0$ or $\sigma_i = \frac{\sigma_0}{\sin{(ele)}}$, and an associated weight value is a reciprocal of the associated measurement error of the observation parameter; and when the $N^{th}$ iteration is performed and N is a positive integer greater than or equal to 2, when the associated weight value is adjusted in a previous iteration process, the associated measurement error of the observation parameter is correspondingly adjusted based on a function relationship, where the function relationship is that the associated weight value is a reciprocal of the associated measurement error of the observation parameter, where $\sigma_0$ represents a measurement error standard deviation of the observation parameter, sin represents a sine function, and *ele* represents an altitude angle of a navigation satellite with a unit of rad.

In a possible implementation, the third determining unit is specifically configured to: perform a chi-square test on the posterior unit weighted errors of the observation parameter; and when the chi-square test fails, determine that an inaccurate observed value exists in the set of the observed values of the observation parameter that are separately associated with the plurality of navigation satellite identifiers.

In a possible implementation, the third determining unit is further configured to: when the chi-square test succeeds, determine that the observed values of the observation parameter that are separately associated with the plurality of navigation satellite identifiers are all accurate, stop iteration, and determine satellite information obtained after a previous iteration as valid data.

In a possible implementation, when performing the chi-square test on the posterior unit weighted errors of the observation parameter, the third determining unit is specifically configured to: use a redundant observation parameter as a degree of freedom, where the redundant observation parameter is the quantity of the plurality of navigation satellite identifiers minus the quantity of unknown parameters in the observation equation of the observation parameter; determine a confidence level based on the observation parameter; query a chi-square distribution table based on the degree of freedom and the confidence level, to determine a theoretical value of the chi-square test; and determine whether the chi-square test succeeds based on a comparison result between the posterior unit weighted errors and the theoretical value.

In a possible implementation, the first determining module is further configured to: stop iteration when determining that a quantity of iterations reaches a specified quantity or determining that a quantity of a plurality of navigation satellite identifiers in satellite information obtained after the current iteration is less than or equal to a specified threshold; and determine the satellite information obtained after the current iteration as valid data.

In a possible implementation, the fourth determining unit is specifically configured to: determine a positioning solution result based on the observation equation of the observation parameter and the satellite information of the current iteration; and for each of the plurality of navigation satellite identifiers: determine, based on the positioning solution result, the observation equation of the observation parameter, and satellite data associated with the navigation satellite identifier, a theoretical calculated value of the observation parameter that is associated with the navigation satellite identifier; and use a difference between an observed value of the observation parameter and the theoretical calculated value of the observation parameter as a residual of the observation parameter that is associated with the navigation satellite identifier.

In a possible implementation, the observation parameter is a pseudo-range, and when determining the positioning solution result based on the observation equation of the observation parameter and the satellite information, the fourth determining unit is specifically configured to: expand a pseudo-range observation equation into a linearized form by using Taylor series; and determine the positioning solution result based on the linearized pseudo-range observation equation and the satellite information by using a weighted least square method.

In a possible implementation, the observation parameter is a carrier phase, and when determining the positioning solution result based on the observation equation of the observation parameter and the satellite information, the fourth determining unit is specifically configured to: perform a subtraction operation on a carrier observation equation of a current epoch and a carrier observation equation of a previous epoch to obtain an inter-epoch single-difference carrier observation equation; perform linearization processing on the inter-epoch single-difference carrier observation equation; and determine the positioning solution result based on the linearized inter-epoch single-difference carrier observation equation and the satellite information by using a weighted least square method.

In a possible implementation, the observation parameter is a pseudo-range, that an observed value of the observation parameter is inaccurate includes that a gross error exists in an observed value of the pseudo-range, and that an observed value of the observation parameter is accurate includes that no gross error exists in an observed value of the pseudo-range; and/or the observation parameter is a carrier phase, that an observed value of the observation parameter is inaccurate includes that a cycle slip exists in an observed value of the carrier phase, and that an observed value of the observation parameter is accurate includes that no cycle slip exists in an observed value of the carrier phase.

In a possible implementation, the fourth determining module is specifically configured to: remove the target navigation satellite identifier from the plurality of navigation satellite identifiers in the satellite information of the current iteration; reduce the weight value of the target navigation satellite identifier in the plurality of navigation satellite identifiers in the satellite information of the current iteration; or when there are more than two target navigation satellite identifiers, remove a part of target navigation satellite identifiers from the plurality of navigation satellite identifiers in the satellite information of the current iteration, and reduce weight values of the other part of target navigation satellite identifiers in the plurality of navigation satellite identifiers in the satellite information of the current iteration.

In a possible implementation, the observed value of the observation parameter is single-frequency data; and/or the satellite data includes three-dimensional coordinates and positioning error data of a navigation satellite indicated by the navigation satellite identifier.

According to a third aspect, an embodiment of this application provides a data preprocessing apparatus. The apparatus includes: at least one memory, configured to store a program; and at least one processor, configured to execute the program stored in the memory. When the program stored in the memory is executed, the processor is configured to perform the method according to the first aspect.

According to a fourth aspect, an embodiment of this application provides a chip. The chip is used in an electronic device and includes an interface and one or more processors. The interface is configured to receive code instructions and transmit the code instructions to the processor. The processor is configured to run the code instructions, to enable the electronic device to perform the method according to the first aspect.

According to a fifth aspect, an embodiment of this application provides a computer-readable storage medium. The computer-readable storage medium stores a computer program. When the computer program is executed on a computer, the computer is enabled to perform the method according to the first aspect.

According to a sixth aspect, an embodiment of this application provides a computer program product including instructions. When the instructions are run on a computer, the computer is enabled to perform the method according to the first aspect.

Other features and advantages of the present invention are described in detail in the following part of specific embodiments.

## BRIEF DESCRIPTION OF DRAWINGS

The following briefly describes the accompanying drawings that need to be used in descriptions of embodiments or a current technology.

FIG. 1 is a diagram of an architecture of a satellite navigation system according to an embodiment of this application;
FIG. 2 is an example flowchart of a TurboEdit cycle slip detection method;
FIG. 3A and FIG. 3B are a specific flowchart of a data preprocessing process according to an embodiment of this application;
FIG. 4 is a flowchart of a data preprocessing method according to an embodiment of this application;
FIG. 5 is a specific flowchart of step S402 of the data preprocessing method shown in FIG. 4;
FIG. 6 is a specific flowchart of step S403 of the data preprocessing method shown in FIG. 4;
FIG. 7 is a specific flowchart of step S404 of the data preprocessing method shown in FIG. 4;
FIG. 8 is a schematic diagram of a structure of a data preprocessing apparatus according to an embodiment of this application;
FIG. 9 is a schematic diagram of a specific structure of a first determining module 802 in the data preprocessing apparatus shown in FIG. 8;
FIG. 10 is a schematic diagram of a specific structure of a second determining module 803 in the data preprocessing apparatus shown in FIG. 8;
FIG. 11 is a schematic diagram of a specific structure of a third determining module 804 in the data preprocessing apparatus shown in FIG. 8;
FIG. 12 is a schematic diagram of a structure of another data preprocessing apparatus according to an embodiment of this application; and
FIG. 13 is a schematic diagram of a structure of a chip according to an embodiment of this application.

## DESCRIPTION OF EMBODIMENTS

To make objectives, technical solutions, and advantages of embodiments of this application clearer, the following describes the technical solutions in embodiments of this application with reference to the accompanying drawings.

In descriptions of embodiments of this application, terms such as "example", "for example", or "in an example" are used to represent giving an example, an illustration, or a description. Any embodiment or design scheme described with "example", "for example", or "in an example" in embodiments of this application should not be explained as being more preferred or having more advantages than another embodiment or design scheme. Exactly, use of the term "example", "for example", "in an example", or the like is intended to present a relative concept in a specific manner.

In the descriptions of embodiments of this application, the term "and/or" describes only an association relationship for describing associated objects and represents that three relationships may exist. For example, A and/or B may represent the following three cases: Only A exists, both A and B exist, and only B exists. In addition, unless otherwise specified, the term "a plurality of" means two or more.

In addition, terms "first" and "second" are merely used for the purpose of description, and shall not be understood as indicating or implying relative importance or implicitly indicating indicated technical features. Therefore, a feature limited by "first" or "second" may explicitly or implicitly include one or more such features. Terms "include", "contain", "have", and other variants thereof all mean "include but are not limited to", unless otherwise specifically emphasized in another manner.

The following describes in detail abbreviations and key terms used in embodiments of this application.

A pseudo-range (pseudo-range) is an approximate distance between a ground receiver and a satellite in a satellite positioning process. Assuming that a satellite clock and a receiver clock are strictly synchronized, propagation time of a satellite signal can be obtained based on transmitting time of the signal and receiving time at which the receiver receives the signal, and then a satellite-ground distance can be obtained by multiplying the propagation time by a propagation speed. However, a clock difference between the two clocks is inevitable, and the signal is affected by factors such as atmospheric refraction during propagation. Therefore, the distance directly measured by using this method is not equal to an actual distance from the satellite to the ground receiver, and the distance is referred to as a pseudo-range. To determine a location of the receiver, at least four satellites are required, meaning that there are four pseudo-ranges and four sets of satellite orbit data.

A carrier phase (carrier phase) is a phase difference between a carrier obtained after a receiver captures and tracks a satellite signal and a carrier generated by an oscillator of the receiver. A carrier (carrier wave, carrier signal, or carrier) is a wave generated by the oscillator and transmitted on a communication channel, and is modulated to transmit voice or other information. A carrier phase measurement value (observed value) at a specific moment refers to a difference between a phase of a reference signal generated by the receiver at the moment and a phase of a carrier signal received from a satellite at the moment.

A gross error, referred to as a gross error for short, is an error that is clearly beyond expectation under a specified condition. Therefore, the gross error is also an error that clearly distorts a measurement result. Causes for generating the gross error include a subjective cause and an objective cause. For example, due to negligence of an experimenter, misreading, misrecording, or miscalculation occurs during measurement.

A cycle slip (cycle slip) is transition or interruption of whole cycle counting due to a loss of lock of a satellite signal during carrier phase measurement of a global positioning system technology.

A residual in mathematical statistics collection refers to a difference between an actual observed value and an estimated value (fitted value). The residual may be considered as a remaining part of the observed value after useful information included in the observed value is deducted. The observed value may be greater than the estimated value (where the residual is positive), or the observed value may be less than the estimated value (where the residual is negative). The residual is a direct and objective standard for evaluating quality of the observed value. When the quality of the observed value is good, the residual needs to be close to zero and a jitter is small. Otherwise, the observed value may be poor or some deviations or errors are not completely corrected.

MW (Melbourne-Wubbena) observed value combination is a combination observed value algorithm proposed by Melbourne and Wubbena in 1985. The method is to subtract a narrow lane combination of pseudo-range observed values from a wide lane combination of phase observed values in a same epoch, and is applicable to cycle slip detection of real-time observed values. It should be noted that the combination observed value algorithm requires both pseudo-range observed values of two frequencies and carrier observed values of the two frequencies. For details, refer to the following detailed descriptions of a formula for calculating an MW observed value combination.

A measurement error (measure error) is a difference between a measurement result and an actual value during measurement. The actual value, or referred to as a true value, exists objectively, and is a real value reflecting an object under specific time and space conditions, but is difficult to be accurately expressed. A measured value is a result obtained through measurement. A specific difference always exists between the two values, and is referred to as the measurement error.

A standard deviation (standard deviation), also referred to as a mean square error (mean square error), is an average of distances from pieces of data to an average, is a square root of an average of a square sum of deviations from average, and is represented by $\sigma$. The standard deviation is an arithmetic square root of a variance. The standard deviation can reflect a dispersion degree of a data set. If averages are the same, standard deviations are not necessarily the same. The standard deviation can reflect information (for example, stability) that cannot be reflected by the average.

Cluster analysis is an analysis process of grouping a set of physical or abstract objects into a plurality of types including similar objects. A difference between clustering and classification lies in that types obtained through clustering are unknown. Clustering is a process of classifying data into different types or clusters. Therefore, objects of a same type or a same cluster are very similar, and objects of different types or different clusters are very different.

Satellite ephemerides can be classified into two types: a broadcast ephemeris and a precise ephemeris. The precise ephemeris has high precision, is mainly used for post-event processing, and is usually used for precision positioning. For example, the precise ephemeris is an IGS precise ephemeris. The broadcast ephemeris is a prediction ephemeris broadcast by a satellite after extrapolation processing is performed on observation data of a tracking station in ground surveillance, and is mainly used for real-time navigation and positioning.

An overdetermined equation set refers to an equation set in which a quantity of equations is greater than a quantity of unknown quantities. For an equation set Ra=y, R is an $n \times m$ matrix. If R is full column rank, and $n > m$, the equation set has no exact solution. In this case, the equation set is referred to as an overdetermined equation set.

It should be noted that embodiments of this application and features in embodiments may be mutually combined when there is no conflict. The following describes this application in detail with reference to the accompanying drawings by using embodiments.

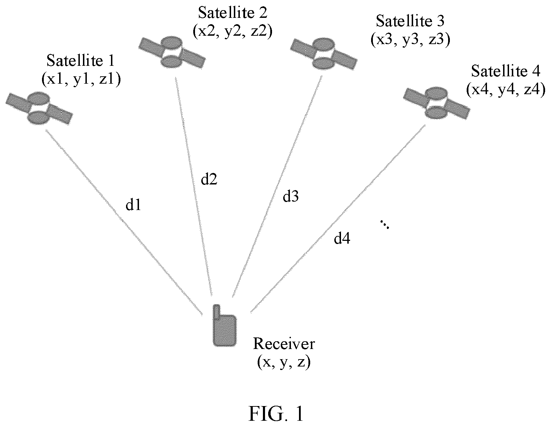

FIG. 1 is a diagram of an architecture of a satellite navigation system according to an embodiment of this application. As shown in FIG. 1, the satellite navigation system includes three parts: a space satellite constellation, ground surveillance, and user equipment.

The space satellite constellation is a space part of the satellite navigation system, and a plurality of navigation satellites constitute a space navigation network.

The ground surveillance (not shown in FIG. 1) is configured to track, measure, and predict satellite orbits, and control and manage working of devices on the satellites. The ground surveillance usually includes parts such as a tracking station, a telemetry station, a computing center, an injection station, and a time unification system. The tracking station is configured to track and measure location coordinates of the satellites. The telemetry station receives telemetry data from the satellites for ground surveillance and analysis of working statuses of the devices on the satellites. The computing center calculates orbits of the satellites based on the information, predicts orbit parameters in a next period of time, determines navigation information to be transmitted to the satellites, and sends the navigation information to the satellites through the injection station.

The user equipment receives weak signals sent by the satellites, obtains orbit parameters, timing information, and the like of the satellites through demodulation and decoding, and measures navigation parameters (distances, distance differences, distance change rates, and the like). Then, a computer calculates location coordinates (two-dimensional coordinates or three-dimensional coordinates) and a speed vector component of a user. The user equipment usually has two functions: a data receiving function and a data processing function. The two functions may be implemented by one device, and the device may be a receiver, a mobile phone, a tablet computer, or the like. Alternatively, the two functions may be separately implemented by different devices. For example, a receiver implements the data receiving function, and the computer may implement the data processing function of processing received data.

When positioning is performed, locations of the satellites and distances from the satellites to the user equipment such as the receiver need to be known. The location of the satellite may be deduced based on a navigation message. For the distance, the receiver may generate two basic distance measurement values for each satellite: a pseudo-range and a carrier phase. In this specification, that an observed value of the pseudo-range is inaccurate means that a gross error exists in the observed value of the pseudo-range, and that an observed value of the pseudo-range is accurate means that no gross error exists in the observed value of the pseudo-range. That an observed value of the carrier phase is inaccurate means that a cycle slip exists in the observed value of the carrier phase, and that an observed value of the carrier phase is accurate means that no cycle slip exists in the observed value of the carrier phase.

Observation data preprocessing can accurately find a gross error or cycle slip in time and process the gross error or cycle slip properly, to effectively avoid negative impact of the gross error or cycle slip on correctness of an adjustment result and improve positioning precision. On the contrary, if the gross error or cycle slip is not correctly identified, navigation positioning precision of the user is directly affected. In addition, excessive detection of the gross error or cycle slip increases difficulty in real-time quick positioning, and affects efficiency of real-time solution by the user. Therefore, properly detecting the gross error or cycle slip and ensuring a correct detection rate and a false alarm rate directly affect real-time performance and reliability of a user result. Especially for a user in a dynamic situation and a situation with a complex observation condition, a high correct detection rate and a low false alarm rate of the gross error or cycle slip are very practical.

For a carrier, a cycle slip may be considered as a gross error. Therefore, the following uses only the cycle slip as an example to describe a detection method in a related technology.

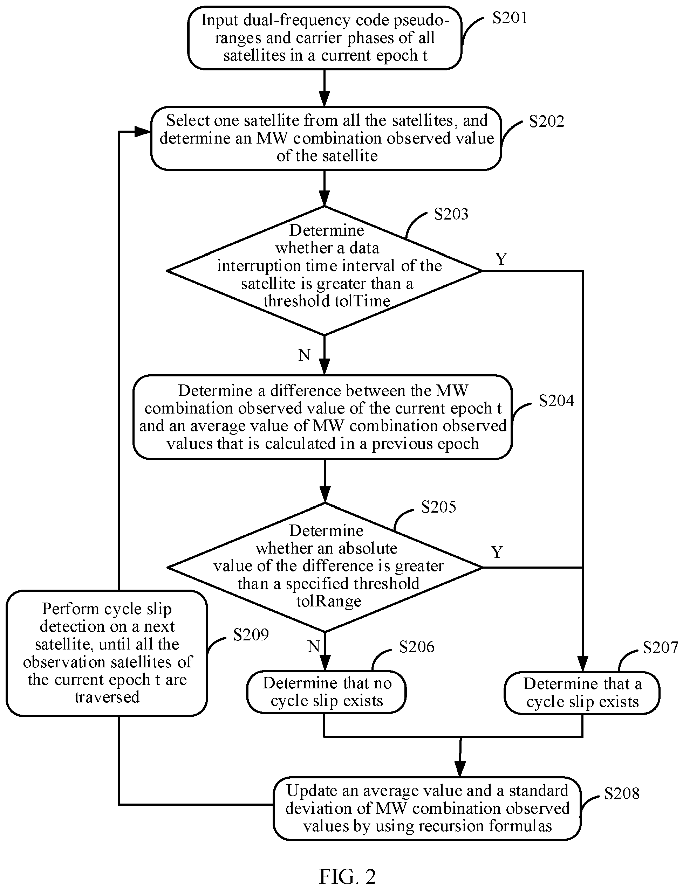

FIG. 2 is an example flowchart of a TurboEdit cycle slip detection method. As shown in FIG. 2, in the TurboEdit cycle slip detection method, input information is code pseudo-ranges and carrier phases, where a geometry-free and ionosphere-free MW combination observed value may be obtained based on the code pseudo-ranges and the carrier phases with reference to a related formula; and output information is a cycle slip identifier of a satellite corresponding to an observation epoch. A current epoch t is used as an example, and the TurboEdit cycle slip detection method specifically includes the following steps:

S201: Input dual-frequency code pseudo-ranges and carrier phases of all satellites in the current epoch t.

S202: Select one satellite from all the satellites, and determine an MW combination observed value of the satellite.

"Selection" herein may be random selection, or may be sequential selection or the like.

S203: Determine whether a data interruption time interval of the satellite is greater than a threshold tolTime. If a determining result is No, go to S204. If a determining result is Yes, go to S207.

S204: Determine a difference between the MW combination observed value of the current epoch t and an average value of MW combination observed values that is calculated in a previous epoch.

S205: Determine whether an absolute value of the difference is greater than a specified threshold tolRange. If a determining result is No, go to S206. If a determining result is Yes, go to S207.

S206: Determine that no cycle slip exists.

S207: Determine that a cycle slip exists.

S208: Update an average value and a standard deviation of MW combination observed values of the satellite in the current epoch t by using recursion formulas.

S209: Perform cycle slip detection on a next satellite, and repeat steps S202 to S208, until all observation satellites of the current epoch t are traversed.

In other words, for each observation satellite s, data interruption is first checked. If data interruption time of the satellite s is greater than the threshold tolTime, it is considered that a cycle slip occurs and cycle slip detection is performed on a next satellite. Otherwise, a next step is performed, to be specific, an MW combination observed value of the satellite s in the current epoch t is determined. Then, the MW combination observed value of the current epoch t is compared with an average value of MW combination observed values that is calculated in the previous epoch. If an absolute value of a difference between the two values is greater than the specified threshold tolRange, it is considered that a cycle slip occurs. Otherwise, for the current epoch t, no cycle slip occurs for the satellite s. An average value and a standard deviation of MW combination observed values of the satellite in the current epoch t are updated by using the recursion formulas, and then cycle slip detection is performed on the next satellite, until all the observation satellites of the current epoch t are traversed. The specified threshold tolRange is usually set to a multiple of a standard deviation of MW combination observed values. However, the foregoing solution has the following disadvantages:

1. In the TurboEdit cycle slip detection method, observed values are required to be continuous. If the observed values are discontinuous (where interruption time is greater than the threshold tolTime), it is determined that a cycle slip exists. In a normal scenario, the observed values are difficult to keep continuous for a long time and are frequently interrupted. As a result, many mistakenly detected cycle slips are generated.

2. In the TurboEdit method, cycle slip detection is performed based on a fixed threshold (namely, the specified threshold tolRange), and a determining result of "either good or bad" is obtained. Actually, it is difficult to select a proper threshold. When the threshold is not properly selected, it is difficult to ensure validity of the determining result.

3. The TurboEdit method can detect whether a cycle slip exists in observed values of one navigation satellite at a time, and cannot simultaneously detect that cycle slips exist in observed values of a plurality of navigation satellites. As a result, detection time is long.

In view of this, embodiments of this application provide a data preprocessing method, a data preprocessing apparatus, and a chip. First, it is generally determined that a set of observed values of an observation parameter that are associated with a plurality of navigation satellite identifiers in satellite information is inaccurate, in other words, there is at least one inaccurate observed value in a plurality of observed values of the observation parameter. Then, a check vector and a plurality of eigenvectors are determined based on the satellite information, where the check vector represents accuracy of the set of the observed values of the observation parameter, the plurality of eigenvectors are in a one-to-one correspondence with the plurality of navigation satellite identifiers, and each eigenvector represents accuracy of an observed value of the observation parameter that is associated with a corresponding navigation satellite identifier. Then, cluster analysis is performed on the check vector and the plurality of eigenvectors, and a navigation satellite identifier corresponding to an eigenvector that is of a same type as the check vector is determined as a target navigation satellite identifier, where an observed value of the observation parameter that is associated with the target navigation satellite identifier is inaccurate, so that based on the target navigation satellite identifier, screening is performed on the plurality of navigation satellite identifiers and a weight value of a target navigation satellite is adjusted. Because satellite data includes three-dimensional coordinates of each satellite, a probability that a gross error/cycle slip occurs in each observed value may be quantitatively described according to a fuzzy cluster analysis method by fully using a geometric distribution status of satellites. In this way, observation data having a gross error or cycle slip can be accurately found, a determining criterion of "black or white/one or the other" in a conventional method does not need to be used, and a problem of a determining result difference caused by different thresholds is avoided. In addition, a weight value may be set for the navigation satellite based on a probability value of uncertainty between good and bad of the observed value associated with a navigation satellite identifier, so that validity of a processing result can be ensured. Further, in embodiments of this application, one or more navigation satellites whose observed values are inaccurate may be detected each time, so that multi-dimensional gross error or cycle slip detection efficiency is improved, and detection accuracy is high, that is, both the detection efficiency and the detection accuracy can be improved.

In addition, a principle of the TurboEdit cycle slip detection method is as follows: An average value and a standard deviation of MW combination observed values are calculated in real time. If in a specific epoch t, an absolute value of a difference between an MW combination observed value of a specific satellite s and an average value of MW combination observed values is greater than the specified threshold tolRange, it is considered that a cycle slip occurs.

The following describes a calculation process of the TurboEdit cycle slip detection method. A formula for calculating an MW observed value combination is as follows:

$$N_w = \frac{P_1 \cdot f_1 + P_2 \cdot f_2}{(f_1 + f_2) \cdot \lambda_w} - (L_1 - L_2) = N_1 - N_2 + \varepsilon_w.$$

In the formula, $N_w$ is wide lane ambiguity of the MW combination, P1 and P2 are pseudo-range code observed values of two frequencies, $f_1$ and $f_2$ are frequency values of the two frequencies, $\lambda_w$ is a wide lane wavelength, $L_1$ and $L_2$ are carrier phase observed values of the two frequencies, N1 and N2 are ambiguity of the two frequencies, and $\varepsilon_w$ is noise and a multipath effect error of the MW combination.

The formula for calculating the MW observed value combination is a geometry-free and ionosphere-free combination. Therefore, it may be considered that a combination value includes only whole cycle ambiguity, observation noise, and the multipath effect error.

An average value and a standard deviation of MW combination observed values are updated by using the recursion formulas:

$$m(s;\ t) = \frac{t-1}{t} m(s;\ t-1) + \frac{1}{t} N_w(s;\ t);$$

and

$$\sigma^2(s;\ t) = \frac{t-1}{t} \sigma^2(s;\ t-1) + \frac{1}{t} [N_w(s;\ t) - m(s;\ t-1)]^2.$$

m(s; t) is an average value of wide lane ambiguity $N_w$ of the navigation satellite s in the current epoch t, m(s; t-1) is an average value of wide lane ambiguity $N_w$ of the navigation satellite s in a previous epoch t-1, $N_w$(s; t) is wide lane ambiguity $N_w$ of the navigation satellite s in the current epoch t, $\sigma^2$(s; t) is a standard deviation of the wide lane ambiguity $N_w$ of the navigation satellite s in the current epoch t, and $\sigma^2$(s; t-1) is a standard deviation of the wide lane ambiguity $N_w$ of the navigation satellite s in the previous epoch t-1.

It can be learned from the foregoing formula that, in the TurboEdit method, the calculation formula requires both dual-frequency pseudo-range observed values and dual-frequency carrier phase observed values. Therefore, a large amount of observation data is required, and a receiver that supports dual-frequency is required. In this way, the method is not applicable to single-frequency observation data detection, resulting in single applicability. In embodiments of this application, the observed value of the observation parameter, for example, a pseudo-range or a carrier phase, is single-frequency data, so that a single-frequency receiver can be used. In addition, observation data of different frequencies are used to repeatedly perform the method in embodiments of this application, so that multi-frequency observation data detection can be implemented. Therefore, the solution in embodiments of this application can be universally used for gross error identification and cycle slip detection of single-frequency/multi-frequency GNSS observation data, and can effectively resolve the problem of single applicability of the existing method, to provide reliable services for single-frequency/multi-frequency users. In addition, in the solution in embodiments of this application, accuracy of pseudo-range observation data and accuracy of carrier phase observation data may be separately detected, in other words, whether a pseudo-range observed value is accurate and whether a carrier phase observed value is accurate may be separately detected. However, in the TurboEdit method, calculation needs to be performed with reference to the dual-frequency pseudo-range observed values and the dual-frequency carrier phase observed values.

In addition to a conventional precision mapping field, a GNSS also plays an important role in emerging fields such as a mobile phone positioning service, a mobile measurement technology, mechanical control, production monitoring, an intelligent transportation system, and an unmanned aerial vehicle. These emerging fields have high requirements on factors such as costs, a size, and availability in a complex environment of a receiver. A user usually uses a low-cost single-frequency receiver that requires a small data communication amount, to effectively reduce a data communication burden between the user and a server, and meet a positioning requirement of large-scale common navigation users. Therefore, a precise single-point positioning requirement based on single-frequency is becoming more prominent, and has an important research value. In embodiments of this application, single-frequency precise single-point positioning is mainly used as an example for description. For multi-frequency precise single-point positioning, refer to the single-frequency precise single-point positioning, to repeatedly perform the single-frequency precise single-point positioning for a plurality of times.

It should be noted that the solution in embodiments of this application may not only be applied to a satellite field, but also be applied to another field. For example, in a technical field in which ranging positioning is performed by using a signal, for example, a Wi-Fi signal, a ranging signal is used as an observation quantity to establish a mathematical observation model with a user location, so that gross error quantization calibration preprocessing may be performed according to the solution in embodiments of this application.

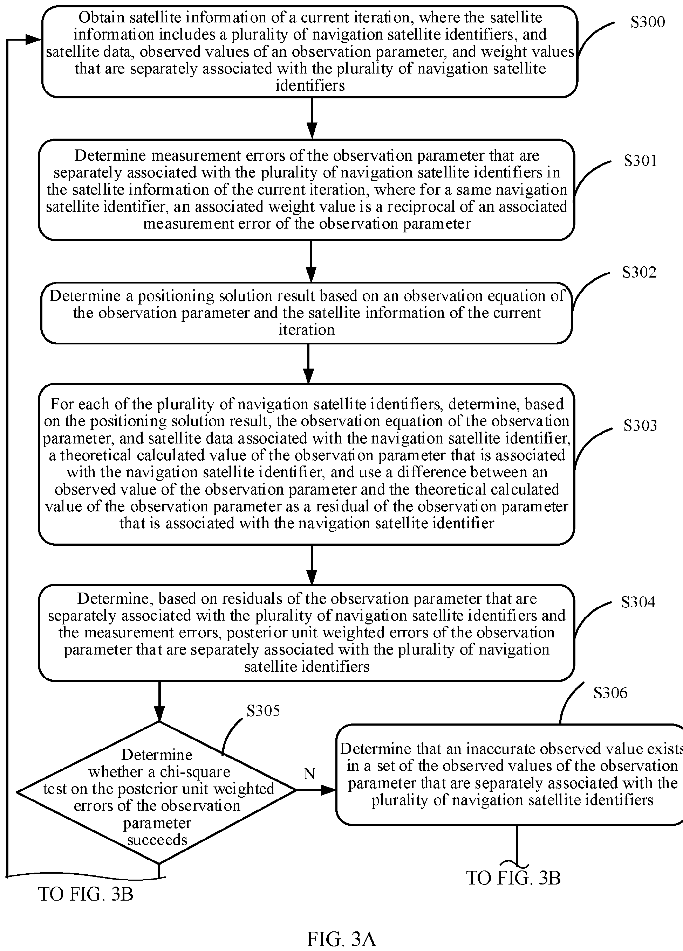

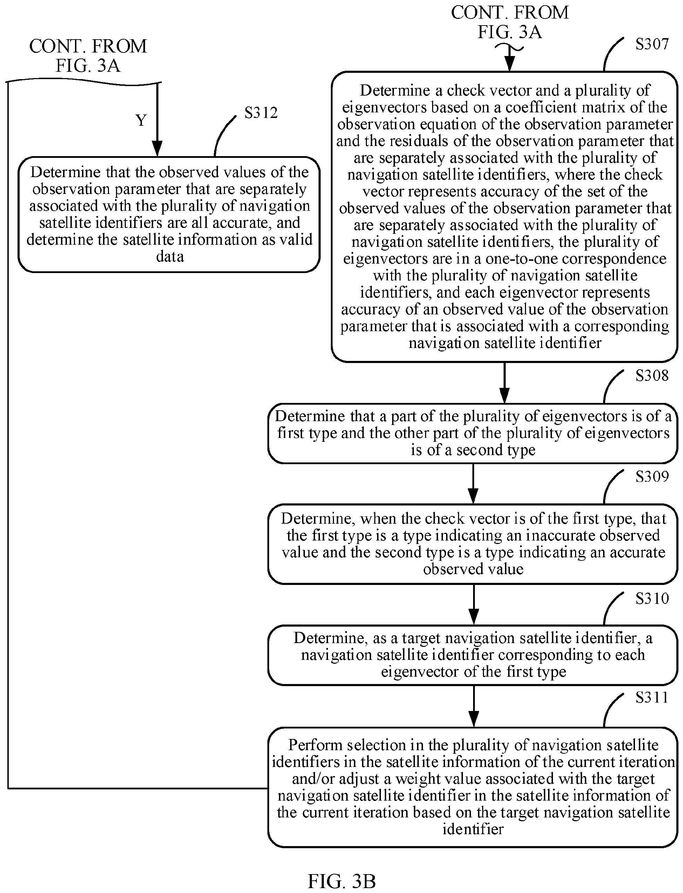

FIG. 3A and FIG. 3B are a specific flowchart of a data preprocessing process according to an embodiment of this application. The data preprocessing process may be performed by user equipment. In this case, the user equipment may have both a data receiving function and a data processing function. Alternatively, the data preprocessing process may be performed by a device having a data processing function in user equipment. In this case, the user equipment may include a first device having a data receiving function, for example, a receiver, and a second device having the data processing function, for example, a computer. As shown in FIG. 3A and FIG. 3B, the data preprocessing process may specifically include the following steps:

S300: Obtain satellite information of a current iteration, where the satellite information includes a plurality of navigation satellite identifiers, and satellite data, observed values of an observation parameter, and weight values that are separately associated with the plurality of navigation satellite identifiers.

When the current iteration is the 1st iteration, the satellite information is originally obtained satellite information, and the originally obtained satellite information includes a plurality of navigation satellite identifiers, and satellite data, observed values of the observation parameter, and weight values that are separately associated with the plurality of navigation satellite identifiers. When the current iteration is an $N^{th}$ iteration and N is a positive integer greater than or equal to 2, the satellite information is satellite information obtained after a previous iteration, and satellite data of a navigation satellite and an observed value of the observation parameter that are associated with a same navigation satellite identifier remain unchanged in an iteration process.

In addition, the observation parameter may be a pseudo-range or a carrier phase, and the satellite data may include three-dimensional coordinates and positioning error data of navigation satellites indicated by the navigation satellite identifiers. The observed value of the observation parameter is single-frequency data. Each navigation satellite identifier may indicate/be associated with one navigation satellite, and navigation satellites indicated by different navigation satellite identifiers are different. In other words, each navigation satellite is associated with a unique navigation satellite identifier. The navigation satellite identifier may be, for example, an ID of the navigation satellite. In addition, it should be noted that the navigation satellite indicated by the navigation satellite identifier in this application is a visible navigation satellite. A navigation satellite that can enable the user equipment to receive a satellite signal is a visible navigation satellite. In other words, the visible navigation satellite is a navigation satellite for which the user equipment, for example, a receiver, can track and obtain an observed value through demodulation.

S301: Determine measurement errors of the observation parameter that are separately associated with the plurality of navigation satellite identifiers in the satellite information of the current iteration, where for a same navigation satellite identifier, an associated weight value is a reciprocal of an associated measurement error of the observation parameter.

Weight values of observed value components are relative. Usually, if a measurement error of an observed value is small, a weight value corresponding to the measurement error needs to be large. Therefore, the weight value $w_i$ may be a reciprocal of the corresponding measurement error $\sigma_i$ of the observed value, that is, $w_i = \frac{1}{\sigma_i}$.

During the 1st iteration, a measurement error of the observation parameter that is associated with each of the plurality of navigation satellite identifiers is $\sigma_i$, where $\sigma_i = \sigma_0$ or $\sigma_i = \frac{\sigma_0}{\sin(ele)}$. $\sigma_0$ represents a measurement error standard deviation of the observation parameter, and is a known quantity, sin represents a sine function, ele represents an altitude angle of the navigation satellite, is a known quantity, may be obtained based on a location of the navigation satellite and a location of a receiver, and is with a unit of rad.

In other words, when the 1st iteration is performed, the measurement error may be usually directly set based on experience. Therefore, it may be considered that the measurement error is known, and then the weight value may be obtained based on a reciprocal relationship between the weight value and the measurement error. However, in the 2nd and subsequent iteration processes, after a weight value associated with a target navigation satellite identifier is adjusted, a measurement error may be re-determined based on an adjusted weight value, in other words, the weight value is first adjusted, and then the measurement error is determined based on the adjusted weight value. The measurement error changes with the weight value.

S302: Determine a positioning solution result based on an observation equation of the observation parameter and the satellite information of the current iteration.

The positioning solution result may include three-dimensional coordinates (x, y, z) of the receiver and a clock difference $\delta t_u$ of the receiver. Because the satellite data and the measurement errors of the observed values of the observation parameter that are separately associated with the plurality of navigation satellite identifiers are different, the weight values separately associated with the plurality of navigation satellite identifiers are considered during positioning solution.

As described above, during the 1st iteration, the weight value in the satellite information is the reciprocal of the measurement error, and the measurement error is known during the 1st iteration. In the 2nd and subsequent iteration processes, a weight value in the satellite information is determined after the previous iteration. To be specific, if a weight value is adjusted in a previous iteration process, an adjusted weight value is used during the current iteration. In this case, a measurement error may be obtained based on a reciprocal relationship between the measurement error and the adjusted weight value.

S303: For each of the plurality of navigation satellite identifiers, determine, based on the positioning solution result, the observation equation of the observation parameter, and satellite data associated with the navigation satellite identifier, a theoretical calculated value of the observation parameter that is associated with the navigation satellite identifier, and use a difference between an observed value of the observation parameter and the theoretical calculated value of the observation parameter as a residual of the observation parameter that is associated with the navigation satellite identifier.

Specifically, the theoretical calculated value of the observation parameter may be obtained by substituting, into the observation equation (formula 1-1 or formula 1-2 described below), the positioning solution result, to be specific, the three-dimensional coordinates (x, y, z) of the receiver and the clock difference $\delta t_u$ of the receiver, and the satellite data, to be specific, three-dimensional coordinates $(x^i, y^i, z^i)$ and positioning error data $\delta t^i$, $I^i$, $T^i$, and $\epsilon_p^i$ of a satellite. The observed value of the observation parameter is a known quantity, and the observed value of the observation parameter remains unchanged in an iteration process. The theoretical calculated value of the observation parameter changes in the iteration process with different satellite information such as a different satellite navigation identifier and/or a different weight value.

The following uses the BeiDou satellite navigation system as an example to describe a GNSS pseudo-range positioning principle and a residual calculation manner.

In the BeiDou satellite navigation system, BeiDou satellites simultaneously broadcast navigation signals to the ground at a same carrier frequency, and different satellites modulate different pseudo random codes (pseudo random noise codes, PRNs) on broadcast signals, where the pseudo random code is referred to as a pseudo-code for short. In addition to implementing spread spectrum modulation, another function of the pseudo-code is ranging. To be specific, a receiver measures a pseudo-code phase of a received BeiDou satellite signal, and converts the pseudo-code phase into a distance (pseudo-range) from a satellite to the receiver with reference to time information modulated on the navigation signal and a local time value of the receiver.

A pseudo-range observation equation of the receiver for a satellite i is $P^i = r^i + \delta t_u - \delta t^i + I^i + T^i + \epsilon_p^i$ (formula 1-1).

$r^i$ represents a geometric distance between the receiver and the satellite i, $(x^i, y^i, z^i)$ represents coordinates of

the satellite, and (x, y, z) represents coordinates of the receiver. In this case, $r^i = \sqrt{(x^i - x)^2 + (y^i - y)^2 + (z^i - z)^2}$. The formula is substituted into the pseudo-range observation equation (formula 1-1), to obtain:

$$P^i = \sqrt{(x^i - x)^2 + (y^i - y)^2 + (z^i - z)^2} + \delta t_u - \delta t^i + I^i + T^i + \epsilon_p^i \text{ (formula 1-2).}$$

In the formula 1-2:

$P^i$ represents a pseudo-range observed value, is a known quantity, and may be calculated based on a satellite ephemeris;
$(x^i, y^i, z^i)$ represents the coordinates of the satellite, is a known quantity, and may be calculated based on the satellite ephemeris;
$\delta t^i$ represents a clock difference of the satellite, is a known quantity, and may be calculated based on the satellite

ephemeris;

$I^i$ represents an ionospheric delay, is a known quantity, and may be calculated based on a parameter utilization model broadcast by the satellite ephemeris;

$T^i$ represents a tropospheric delay, is a known quantity, and may be calculated by a model; $\epsilon_p^i$ represents pseudo-range observation noise;

$(x, y, z)$ represents the coordinates of the receiver, and is an unknown quantity; and $\delta t_u$ represents a clock difference of the receiver, and is an unknown quantity.

Because a positioning solution process to be described below considers a measurement error $\sigma_i$, and the pseudo-range observation noise $\epsilon_p^i$ is a type of measurement error $\sigma_i$, in other words, the measurement error $\sigma_i$ includes the pseudo-range observation noise $\epsilon_p^i$, the pseudo-range observation noise $\epsilon_p^i$ herein does not need to be solved and may be ignored. In this way, in all parameters on left and right sides of an equal sign of the pseudo-range observation equation (formula 1-2), only four unknown parameters exist: a three-dimensional coordinate location (x, y, z) of the receiver and the one-dimensional clock difference $\delta t_u$ of the receiver. Solving the unknown location coordinates $(x, y, z)$ of the receiver is a positioning function of the receiver.

It is assumed that the receiver simultaneously receives navigation signals of n satellites at a specific moment on a specific surface of the earth, in other words, the receiver generates n pseudo-range observed values $P^i$, where i=1, 2, ..., and n. In this way, n corresponding pseudo-range observation equations are arranged together to form the following equation set for pseudo-range calculation:

$$P^1 = r^1 + \delta t_u - \delta t^1 + I^1 + T^1 + \epsilon_p^1$$

$$P^2 = r^2 + \delta t_u - \delta t^2 + I^2 + T^2 + \epsilon_p^2$$

$$\vdots$$

$$P^n = r^n + \delta t_u - \delta t^n + I^n + T^n + \epsilon_p^n.$$

In the foregoing equation set, there are n equations in total, including four unknown numbers (x, y, z) and $\delta t_u$. When n≥4, the four to-be-solved unknown numbers (x, y, z) and $\delta t_u$ may be solved from the equation set, to implement positioning and timing. This is a pseudo-range positioning and timing principle.

When n is a positive integer greater than or equal to 5, the foregoing equation set is an overdetermined equation set, and may be solved by using a least square method. The least square method is a general method for solving an overdetermined equation set, and has a linear matrix equation in the following form: AX=Y.

A is a n*k coefficient matrix, and n≥k. X is a k* 1 unknown parameter column vector, and Y is an n* 1 known vector (observed value).

According to the least square method, optimal estimated values of the unknown parameter X may be obtained: $\hat{X} = (A^TA)^{-1}A^TY$ (formula 2).

Corresponding residuals are: $V = AX - Y$. It can be learned based on a principle of the least square method that the obtained set of optimal estimated values can minimize a square sum $V^TV$ of the residuals of the equations.

Considering that different components $y_i$ of the observed value vector Y have measurement errors of different values, a weight $w_i$ may be set for each observed value component, and it is expected that an observed value $y_i$ with a larger weight plays a more important role in solution using the least square method. After the weight of each measured value is set, each equation of the original linear equation set may be multiplied by a corresponding weight, and a result may be expressed in a matrix form: WAX=WY.

The weight matrix W is an n*n diagonal matrix in the following form:

$$W = \begin{bmatrix} w_1 & & & \\ & w_2 & & \\ & & \ddots & \\ & & & w_n \end{bmatrix}.$$

In this case, a weighted least square solution of the unknown parameter X is: $\hat{X} = (A^TW^TWA)^{-1}A^TW^TWY$ (formula 3).

Specifically, it can be learned from the pseudo-range observation equation in the foregoing formula 1-2 that the pseudo-range observed value $P^i$ is a non-linear function of the coordinates ($x$, $y$, $z$) of the receiver, in other words, the foregoing formula is a non-linear equation. However, the least square method and a weighted least square method solve a linear equation problem. Therefore, the pseudo-range observed value equation needs to be linearized. In an example, when the positioning solution result is determined based on the observation equation of the observation parameter and the satellite information, the pseudo-range observation equation may be first expanded into a linearized form by using Taylor series, and then the positioning solution result is determined based on the linearized pseudo-range observation equation and the satellite information by using the weighted least square method. After linearization, the pseudo-range observation equation may be rewritten into the following form:

$$l_x^i \cdot \Delta x + l_y^i \cdot \Delta y + l_z^i \cdot \Delta z + \Delta \delta t_u = P^i - P_c^i \quad \text{(formula 4)}.$$

$P^i$ is the pseudo-range observed value, and is a known quantity. $P_c^i$ represents a theoretical calculated value corresponding to the observed value, and it can be learned from the formula 1-2 that:

$$P_c^i = \sqrt{(x^i - x_0)^2 + (y^i - y_0)^2 + (z^i - z_0)^2} + \delta t_{u0} - \delta t^i + I^i + T^i + \epsilon_P^i.$$

($x_0$,$y_0$,$z_0$) is approximate coordinates of the receiver, and $\delta t_{u0}$ is an approximate clock difference of the receiver. In the 1st iteration, the approximate coordinates ($x_0$,$y_0$,$z_0$) of the receiver and the approximate clock difference $\delta t_{u0}$ of the receiver are known, and the approximate clock difference $\delta t_{u0}$ of the receiver may be, for example, 0. In the 2nd and subsequent iteration processes, the approximate coordinates ($x_0$, $y_0$, $z_0$) of the receiver and the approximate clock difference $\delta t_{u0}$ of the receiver may be coordinates and a clock difference of the receiver that are determined in a positioning solution process of a previous iteration. In addition, the location coordinates ($x^i$, $y^1$,$z^i$) of the satellite, $\delta t^i$, $I^i$, and $T^i$ are known quantities, and $\epsilon_P^i$ may be ignored. Therefore, $P_c^i$ is a known quantity.

In the formula 4, ($\Delta x$,$\Delta y$,$\Delta z$) is coordinate errors of the receiver, namely, differences between the coordinates ($x$, $y$, $z$) and the approximate coordinates ($x_0$,$y_0$,$z_0$) of the receiver that are determined in the positioning solution process of the current iteration. Specifically, $x = x_o + \Delta x$; $y = y_o + \Delta y$; and $z = z_0 + \Delta z$. $\Delta \delta t_u$ is a clock difference error of the receiver, namely, a difference between the clock difference $\delta t_u$ and the approximate clock difference $\delta t_{u0}$ of the receiver that are determined in the positioning solution process of the current iteration, and $\delta t_u = \delta t_{u0} + \Delta \delta t_u$.

In other words, in each iteration process, because a quantity of navigation satellite identifiers and/or weight values separately associated with a part of navigation satellite identifiers in a plurality of navigation satellite identifiers in satellite information based on which iteration is performed may be adjusted, a positioning solution result, to be specific, three-dimensional coordinates and a clock difference of the receiver, in each iteration process may be different from a positioning solution result in an initial or previous iteration process.

In the formula 4, ( $l_x^i, l_y^i, l_z^i$ ) is a unit observation vector from the receiver to the satellite, and there are the following relations:

$$\begin{cases} l_x^i = -\dfrac{x^i - x_0}{\sqrt{(x^i - x_0)^2 + (y^i - y_0)^2 + (z^i - z_0)^2}} \\[4mm] l_y^i = -\dfrac{y^i - x_0}{\sqrt{(x^i - x_0)^2 + (y^i - y_0)^2 + (z^i - z_0)^2}} \\[4mm] l_z^i = -\dfrac{z^i - x_0}{\sqrt{(x^i - x_0)^2 + (y^i - y_0)^2 + (z^i - z_0)^2}} \end{cases}$$

Because the approximate coordinates ($x_0$, $y_0$, $z_0$) of the receiver and the location coordinates ($x^i$, $y^i$, $z^i$) of the satellite are known, the unit observation vector ( $l_x^i, l_y^i, l_z^i$ ) from the receiver to the satellite is known.

When there are observed values of n satellites, the formula 4 may be further rewritten into a matrix form: $A\Delta X$

= *Y* (formula 5), where

$$A = \begin{bmatrix} l_x^1 & l_y^1 & l_z^1 & 1 \\ l_x^2 & l_y^2 & l_z^2 & 1 \\ \vdots & \vdots & \vdots & \vdots \\ l_x^n & l_y^n & l_z^n & 1 \end{bmatrix}, \ \Delta X = \begin{bmatrix} \Delta x \\ \Delta y \\ \Delta z \\ \Delta \delta t_u \end{bmatrix}, \text{ and } Y = \begin{bmatrix} P^1 - P_c^1 \\ P^2 - P_c^2 \\ \vdots \\ P^n - P_c^n \end{bmatrix}.$$

Estimated values of the errors ($\Delta x, \Delta y, \Delta z$, and $\Delta \delta t_u$) may be obtained by substituting the formula 5 into the formula 2. With reference to the approximate coordinates ($x_0, y_0, z_0$) of the receiver and the approximate clock difference $\delta t_{u0}$ of the receiver, estimated values of the current unknown parameters can be calculated:

$$\begin{bmatrix} \hat{x} \\ \hat{y} \\ \hat{z} \\ \delta \hat{t}_u \end{bmatrix} = \begin{bmatrix} x_0 \\ y_0 \\ z_0 \\ \delta t_{u0} \end{bmatrix} + \begin{bmatrix} \Delta x \\ \Delta y \\ \Delta z \\ \Delta \delta t_u \end{bmatrix}.$$

The original equation is a non-linear equation, and iterative solution needs to be performed. Therefore, after coordinate and clock difference parameters of the receiver are updated, updated parameters need to be used as approximate values, to continue linearization and least square solution until the errors converge to set thresholds. In this case, a final least square solution can be obtained.

If the weighted least square method is used, the formula 5 may be rewritten into: $WA\Delta X = WY$ (formula 6).

The coordinates ($x, y, z$) and the clock difference $\delta t_u$ of the receiver that are based on the weighted least square method may be obtained through iteration by substituting the formula 5 into the formula 3. After a least square or weighted least square solution (to be specific, the coordinates ($x, y, z$) and the clock difference $\delta t_u$ of the receiver) is obtained, a pseudo-range residual may be calculated according to the following formula:

$$v^i = P^i - \left[ \sqrt{(x^i - x)^2 + (y^i - y)^2 + (z^i - z)^2} + \delta t_u - \delta t^i + I^i + T^i \right] \text{ (formula 7)}.$$

The foregoing formula no longer includes an unknown number, and the coordinates (x, y, z) and the clock difference $\delta t_u$ of the receiver are known. Satellite data (three-dimensional coordinates ($x^i, y^i, z^i$) and positioning error data $\delta t^i$, $I^i$, $T^i$, and $\epsilon_p^i$ of a satellite) and an observed value $P^i$ of the observation parameter that are associated with each navigation satellite identifier may be sequentially substituted into the foregoing formula, to obtain a pseudo-range residual associated with each navigation satellite identifier.

The foregoing uses the pseudo-range as an example to describe a specific process of obtaining a residual. A process of obtaining a residual when the observation parameter is the carrier phase is basically the same as the process of obtaining a residual when the observation parameter is the pseudo-range. A difference lies in that the two processes use different observation equations, and processing processes of the observation equations are also different. The following describes the difference in detail.

First, a carrier observation equation of the receiver for the satellite i is:

$$\lambda L^i = r^i + \delta t_u - \delta t^i - I^i + T^i + \lambda N^i + \epsilon_L^i \text{ (formula 8)}.$$

$\lambda$ represents a carrier wavelength, $L^i$ represents a carrier phase observed value, and $N^i$ represents a carrier whole cycle ambiguity parameter. For other parameters, refer to related descriptions of the pseudo-range observation equation (formula 1-2).

Then, a processing process of the carrier phase observation equation is introduced. Specifically, a carrier observation equation of the receiver for the satellite i in an epoch t1 is:

$$\lambda L^i(t1) = r^i(t1) + \delta t_u(t1) - \delta t^i(t1) - I^i(t1) + T^i(t1) + \lambda N^i(t1) + \epsilon_L^i(t1) \text{ (formula 8-1)}.$$

For an epoch t2, there is the following carrier observation equation:

$$\lambda L^i(t2) = r^i(t2) + \delta t_u(t2) - \delta t^i(t2) - I^i(t2) + T^i(t2) + \lambda N^i(t2) + \epsilon^i_L(t2) \quad \text{(formula 8-2)}.$$

Assuming that arc segments are continuous (time is continuous), when no cycle slip exists between two continuous epochs, a carrier whole cycle ambiguity parameter $N^i(t2)$ of a current epoch, namely, the epoch t2, is equal to a carrier whole cycle ambiguity parameter $N^i(t1)$ of a previous epoch, namely, the epoch t1, and the whole cycle ambiguity parameters $N^i$ may be eliminated by performing a subtraction operation on carrier observation equations of the two continuous epochs to obtain an inter-epoch single-difference carrier observed value equation:

$$\lambda L^i(t2) - \lambda L^i(t1) = r^i(t2) - r^i(t1) + \delta t_u(t2) - \delta t_u(t1) - \delta t^i(t2) + \delta t^i(t1) - I^i(t2) + I^i(t1) +$$
$$T^i(t2) - T^i(t1) + \epsilon^i_L(t2) - \epsilon^i_L(t1) \quad \text{(formula 8-3)}.$$

Parameter combination is performed, to be specific, the clock difference $\delta t_u(t2)$ of the current epoch and the clock difference $\delta t_u(t1)$ of the previous epoch may be combined into a clock difference. In addition, a three-dimensional coordinate location of the receiver of the previous epoch is known. Unknown parameters in the linearized inter-epoch single-difference carrier observation equation are a three-dimensional coordinate location of the receiver of the current epoch and the combined clock difference, and a quantity of the unknown parameters is consistent with that of unknown parameters in the pseudo-range observation equation (formula 1-1 or formula 1-2). Then, with reference to the linearization of the pseudo-range observation equation, for the carrier observation equation, an equation in a matrix form such as that of the formula 5 or the formula 6 may still be obtained, and similarly, parameter solution may be performed by using the least square method or the weighted least square method. In the solutions of this application, because adjustment of a weight $w_i$ is involved, the weighted least square method may be used for parameter solution. Then, with reference to the formula 7, a residual of an inter-epoch single-difference carrier observed value may be calculated. For example, for the carrier phase, $P^i$ in the formula 7 may be replaced with $\lambda L^i(t2) - \lambda L^i(t1)$, and $\delta t_u$ in the formula 7 may be replaced with the combined clock difference.

In other words, when the observation parameter is the carrier phase, when the positioning solution result is determined based on the observation equation of the observation parameter and the satellite information, a subtraction operation may be first performed on a carrier observation equation of a current epoch and a carrier observation equation of a previous epoch to obtain an inter-epoch single-difference carrier observation equation. Then, linearization processing is performed on the inter-epoch single-difference carrier observation equation. Then, the positioning solution result may be determined based on the linearized inter-epoch single-difference carrier observation equation and the satellite information by using the weighted least square method. Then, for a process of calculating a residual of an inter-epoch single-difference carrier observed value, refer to the process of calculating the pseudo-range residual.

S304: Determine, based on residuals of the observation parameter that are separately associated with the plurality of navigation satellite identifiers and the measurement errors, pseudo-range posterior unit weighted errors separately associated with the plurality of navigation satellite identifiers.

Specifically, a formula of the posterior unit weighted error is:

$$\sigma = \sqrt{\frac{\sum_{i=1}^n v_i^2/\sigma_i^2}{n-k}}.$$

n is a quantity of observation parameters participating in positioning, namely, a quantity of the plurality of navigation satellite identifiers in the satellite information.

k is a quantity of to-be-solved parameters. For the pseudo-range, k is a quantity of unknown parameters in the formula 1-1 or the formula 1-2. Specifically, there are a total of four unknown parameters: the coordinates $(x, y, z)$ and the clock difference $\delta t_u$ of the receiver. For the carrier phase, k is a quantity of unknown parameters in the formula 8-3. Specifically, there are a total of four unknown parameters: the three-dimensional coordinate location of the receiver of the current epoch and the combined clock difference.

$v_i$ is a residual of an $i^{th}$ observed value, and may be obtained through calculation according to the formula 7.

$\sigma_i$ is a measurement error of the observed value. During initial positioning (without weight adjustment, in other words, when the 1st iteration is performed), it is considered by default that measurement errors of all observed values are the same.

S305: Determine whether a chi-square test on the posterior unit weighted errors of the observation parameter succeeds. If the chi-square test fails, perform S306. If the chi-square test succeeds, perform S312. The chi-square test may be performed according to the following process:

First, a redundant observation parameter is used as a degree of freedom, and a confidence level is determined based on the observation parameter.

Specifically, the redundant observation parameter is the quantity of the plurality of navigation satellite identifiers minus a quantity of unknown parameters in the observation equation of the observation parameter. For the pseudo-range or the carrier phase, the redundant observation parameter is n-k. For meanings of n and k, refer to related parameter descriptions of the formula of the posterior unit weighted error. In addition, the redundant observation parameter is a value of a subscript n-k of a coefficient matrix $A_{n \times k}$ of the observation equation to be described below.

In addition, because a wavelength of a carrier is far less than a wavelength of a code, in a case of a same resolution, observation precision of a carrier phase is far higher than observation precision of a code phase, in other words, a measurement error of a pseudo-range is higher than a measurement error of the carrier phase. Therefore, a confidence level determined based on the pseudo-range is lower than a confidence level determined based on the carrier phase.

Then, a chi-square distribution table is queried based on the degree of freedom and the confidence level, to determine a theoretical value of the chi-square test.

In other words, the redundant observation parameter may be used as the degree of freedom k, and the confidence level may be determined based on the observation parameter. A sum of a P value and the confidence level is 1, so that the P value may be determined based on the determined confidence level. A longitudinal parameter of the chi-square table is the degree of freedom k, and a horizontal parameter is the P value. The theoretical value may be obtained by querying the chi-square table based on the determined degree of freedom k and P value. Then, the posterior unit weighted error is compared with the theoretical value. If the posterior unit weighted error is less than or equal to the theoretical value, the chi-square test succeeds. If the posterior unit weighted error is greater than the theoretical value, the chi-square test fails. For the chi-square distribution table, refer to the following Table 1.

**Table 1 Chi-square distribution table**

| Degree of freedom k\P value (probability) | 0.95 | 0.90 | 0.80 | 0.70 | 0.50 | 0.30 | 0.20 | 0.10 | 0.05 | 0.01 | 0.001 |
|---|---|---|---|---|---|---|---|---|---|---|---|
| 1 | 0.004 | 0.02 | 0.06 | 0.15 | 0.46 | 1.07 | 1.64 | 2.71 | 3.84 | 6.64 | 10.83 |
| 2 | 0.10 | 0.21 | 0.45 | 0.71 | 1.39 | 2.41 | 3.22 | 4.60 | 5.99 | 9.21 | 13.82 |
| 3 | 0.35 | 0.58 | 1.01 | 1.42 | 2.37 | 3.66 | 4.64 | 6.25 | 7.82 | 11.34 | 16.27 |
| 4 | 0.71 | 1.06 | 1.65 | 2.20 | 3.36 | 4.88 | 5.99 | 7.78 | 9.49 | 13.28 | 18.47 |
| 5 | 1.14 | 1.61 | 2.34 | 3.00 | 4.35 | 6.06 | 7.29 | 9.24 | 11.07 | 15.09 | 20.52 |
| 6 | 1.63 | 2.20 | 3.07 | 3.83 | 5.35 | 7.23 | 8.56 | 10.64 | 12.59 | 16.81 | 22.46 |
| 7 | 2.17 | 2.83 | 3.82 | 4.67 | 6.35 | 8.38 | 9.80 | 12.02 | 14.07 | 18.48 | 24.32 |
| 8 | 2.73 | 3.49 | 4.59 | 5.53 | 7.34 | 9.52 | 11.03 | 13.36 | 15.51 | 20.09 | 26.12 |
| 9 | 3.32 | 4.17 | 5.38 | 6.39 | 8.34 | 10.66 | 12.24 | 14.68 | 16.92 | 21.67 | 27.88 |
| 10 | 3.94 | 4.86 | 6.18 | 7.27 | 9.34 | 11.78 | 13.44 | 15.99 | 18.31 | 23.21 | 29.59 |

S306: When the chi-square test fails, determine that an inaccurate observed value exists in a set of the observed values of the observation parameter that are separately associated with the plurality of navigation satellite identifiers.

Each navigation satellite identifier is associated with one observed value of the observation parameter, and the plurality of navigation satellite identifiers have a plurality of observed values of the observation parameter. The "set of the observed values of the observation parameter" herein refers to the plurality of observed values of the observation parameter.

S307: Determine a check vector and a plurality of eigenvectors based on the coefficient matrix of the observation equation of the observation parameter and the residuals of the observation parameter that are separately associated with the plurality of navigation satellite identifiers, where the check vector represents accuracy of the set of the observed values of the observation parameter that are separately associated with the plurality of navigation satellite identifiers, the plurality of eigenvectors are in a one-to-one correspondence with the plurality of navigation satellite identifiers, and each eigenvector represents accuracy of an observed value of the observation parameter that is associated with a corresponding navigation satellite identifier.

Samples may be constructed based on the residuals of the observation parameter and the coefficient matrix of the observation equation, to perform cluster analysis on the plurality of target navigation satellite identifiers. The residual may reflect a difference between an actual observed value and an estimated value. In addition, coordinate locations of satellites are used in a residual calculation process, and the coordinate locations of the satellites are also used in the coefficient matrix of the observation equation. In this way, satellite geometric distribution can be fully used, to improve accuracy of finding observation data having a gross error or cycle slip, and therefore ensure validity of a processing result.

Specifically, in an example, linearization processing may be first performed on the observation equation of the observation parameter. Then, QR decomposition is performed on the coefficient matrix $A_{n \times k}$ of the linearized observation equation (the formula 5) of the observation parameter to obtain a matrix $Q_{n \times n}$, where $A_{n \times k} = Q_{n \times n} \times R_{n \times k}$, n is the quantity of the plurality of navigation satellite identifiers, and k is the quantity of unknown numbers in the observation equation of the observation parameter. As described above, for each of the pseudo-range and the carrier phase, there are four unknown numbers. Next, the matrix $Q_{n \times n}$ may be transposed to obtain a matrix $Q^T$. Further, a $(k+1)^{th}$ row to an $n^{th}$ row of the matrix $Q^T$ are selected to form a submatrix $T_{(n-k) \times n}$, where n-k is the redundant observation parameter, the submatrix $T_{(n-k) \times n}$ reflects impact of a residual of the redundant observation parameter on a positioning result/unknown parameter. Moreover, for each of the plurality of navigation satellite identifiers, each column of the submatrix $T_{(n-k) \times n}$ is sequentially multiplied by a residual $v_i$ (where i=1, 2, ..., and n) of the observation parameter that is associated with the corresponding navigation satellite identifier, to obtain an eigenvector $a_i$ (where i=1, 2, ..., and n) corresponding to the navigation satellite identifier, and the submatrix $T_{(n-k) \times n}$ is multiplied by a residual vector $V = [v_1, v_2, v_3, ..., v_n]^T$ of the observation parameter to obtain the check vector t=TV, where the residual vector $V = [v_1, v_2, v_3, ..., v_n]^T$ of the observation parameter is a column vector formed by sequentially arranging the residuals of the observation parameter that are associated with the plurality of navigation satellite identifiers. Finally, cluster analysis may be performed on the plurality of navigation satellite identifiers in the satellite information based on the check vector and the plurality of eigenvectors, to determine at least one target navigation satellite identifier.

In other words, the QR decomposition may be first performed on the coefficient matrix, and then several rows corresponding to subsequent redundant observation parameters are selected from the transposed matrix $Q^T$ of the matrix $Q_{n \times n}$ to form the submatrix $T_{(n-k) \times n}$. In this way, a quantity n of columns of the submatrix $T_{(n-k) \times n}$ is the same as the quantity of the plurality of navigation satellite identifiers, and a quantity of rows is a quantity of the redundant observation parameters. Then, a residual $v_1$ of the observation parameter that is associated with the $1^{st}$ navigation satellite identifier may be multiplied by the $1^{st}$ column of the submatrix $T_{(n-k) \times n}$, to obtain the $1^{st}$ eigenvector $a_1$ representing accuracy of an observed value of the observation parameter that is associated with the $1^{st}$ navigation satellite identifier. A residual $v_2$ of the observation parameter that is associated with the $2^{nd}$ navigation satellite identifier may be multiplied by the $2^{nd}$ column of the submatrix $T_{(n-k) \times n}$, to obtain the $2^{nd}$ eigenvector $a_2$ representing accuracy of an observed value of the observation parameter that is associated with the $2^{nd}$ navigation satellite identifier. By analogy, a residual $v_n$ of the observation parameter that is associated with the $n^{th}$ navigation satellite identifier may be multiplied by the $n^{th}$ column of the submatrix $T_{(n-k) \times n}$, to obtain the $n^{th}$ eigenvector $a_n$ representing accuracy of an observed value of the observation parameter that is associated with the $n^{th}$ navigation satellite identifier. The check vector t=TV may be obtained by multiplying the submatrix $T_{(n-k) \times n}$ by the residual vector $V = [v_1, v_2, v_3, ..., v_n]^T$ formed by the residuals of the observation parameter that are associated with the plurality of navigation satellite identifiers. It may be understood that the eigenvectors and the check vector may alternatively be obtained in another manner, provided that the eigenvector can represent the accuracy of the observed value of the observation parameter that is associated with the corresponding navigation satellite identifier, and the check vector can represent the accuracy of the set of the observed values of the observation parameter that are associated with the plurality of navigation satellite identifiers.

In an example, for a specific process of the cluster analysis, refer to S308 to S310 to be described below. In addition, to clearly describe the process of the cluster analysis, an example case shown in the following Table 2 is used for specific description. In Table 2, there are a total of six navigation satellite identifiers, in other words, there are six navigation satellites, and there are also a check vector t and six corresponding eigenvectors: $a_1$, $a_2$, $a_3$, $a_4$, $a_5$, and as.

In addition, membership degree values in Table 2 may be obtained after calculation is performed on the check vector t and the eigenvectors $a_1$, $a_2$, $a_3$, $a_4$, $a_5$, and $a_6$ by using a cluster analysis algorithm. In addition, after the cluster analysis is performed, the check vector t and the eigenvectors $a_1$, $a_2$, $a_3$, $a_4$, $a_5$, and as may be classified into two types, to be specific, a type indicating an accurate observed value and a type indicating an inaccurate observed value.

It should be noted that, in Table 2, a type corresponding to a third membership degree value of each eigenvector is the same as a type corresponding to a first membership degree value of the check vector, that is, both correspond to a first type, and a type corresponding to a fourth membership degree value of each eigenvector is the same as a type corresponding to a second membership degree value of the check vector, that is, both correspond to a second type.

**Table 2**

| Navigation satellite identifier | 1 | 2 | 3 | 4 | 5 | 6 | | |
|---|---|---|---|---|---|---|---|---|
| Eigenvector | $a_1$ | $a_2$ | $a_3$ | $a_4$ | $a_5$ | $a_6$ | Check vector | t |
| Third membership degree value | 0.7 | 0.4 | 0.2 | 0.3 | 0.1 | 0.0 | First membership degree value | 0.8 |
| Fourth membership degree value | 0.3 | 0.6 | 0.8 | 0.7 | 0.9 | 1.0 | Second membership degree value | 0.2 |

S308: Determine that a part of the plurality of eigenvectors is of the first type and the other part of the plurality of eigenvectors is of the second type.

Specifically, for each of the plurality of eigenvectors, a third membership degree value corresponding to the first type and a fourth membership degree value corresponding to the second type that are of the eigenvector may be first determined. Then, it is determined based on the third membership degree value and the fourth membership degree value that the eigenvector is of the first type or the second type. Specifically, there may be but is not limited to the following three solutions:

In a first solution, when the third membership degree value is greater than or equal to the fourth membership degree value, it is determined that the eigenvector is of the first type; when the third membership degree value is less than the fourth membership degree value, it is determined that the eigenvector is of the second type. With reference to Table 2, for the eigenvector $a_1$, a third membership degree value corresponding to the first type is 0.7, and a fourth membership degree value corresponding to the second type is 0.3. In this case, the eigenvector $a_1$ is of the first type. Correspondingly, eigenvectors $a_2$, $a_3$, $a_4$, $a_5$, and $a_6$ are of the second type. Further, with reference to S309 and S310 to be described below, it can be learned that because the check vector t is of the first type, and the first type is the type indicating an inaccurate observed value, a navigation satellite identifier 1 corresponding to the eigenvector $a_1$ is a target navigation satellite identifier.

In a second solution, when the third membership degree value is greater than or equal to a first specified threshold, it is determined that the eigenvector is of the first type; when the third membership degree value is less than the first specified threshold, it is determined that the eigenvector is of the second type. With reference to Table 2, if the first specified threshold is 0.6, the eigenvector $a_1$ is of the first type, and eigenvectors $a_2$, $a_3$, $a_4$, $a_5$, and as are of the second type. Further, with reference to S309 and S310 to be described below, it can be learned that because the check vector t is of the first type, and the first type is the type indicating an inaccurate observed value, a navigation satellite identifier 1 corresponding to the eigenvector $a_1$ is a target navigation satellite identifier. If the first specified threshold is 0.4, eigenvectors $a_1$ and $a_2$ are of the first type, and eigenvectors $a_3$, $a_4$, $a_5$, and as are of the second type. In this case, navigation satellite identifiers 1 and 2 respectively corresponding to the eigenvectors $a_1$ and $a_2$ are target navigation satellite identifiers.

In a third solution, when the fourth membership degree value is less than a second specified threshold, it is determined that the eigenvector is of the first type; when the fourth membership degree value is greater than or equal to the second specified threshold, it is determined that the eigenvector is of the second type. With reference to Table 2, if the second specified threshold is 0.4, the eigenvector $a_1$ is of the first type, and eigenvectors $a_2$, $a_3$, $a_4$, $a_5$, and $a_6$ are of the second type. Further, with reference to S309 and S310 to be described below, it can be learned that because the check vector t is of the first type, and the first type is the type indicating an inaccurate observed value, a navigation satellite identifier 1 corresponding to the eigenvector $a_1$ is a target navigation satellite identifier. If the second specified threshold is 0.6, eigenvectors $a_1$ and $a_2$ are of the first type, and eigenvectors $a_3$, $a_4$, $a_5$, and as are of the second type. In this case, navigation satellite identifiers 1 and 2 respectively corresponding to the eigenvectors $a_1$ and $a_2$ are target navigation satellite identifiers.

In other words, there may be the following two processing manners for determining a type of the eigenvector: In a first manner, as shown in the first solution, the third membership degree value is compared with the fourth membership degree value. In a second manner, as shown in the second solution and the third solution, the third membership degree value or the fourth membership degree value is compared with a specified threshold. The first manner is easy to implement, because as long as the two membership degree values are not equal, in other words, one is greater than the other, a type corresponding to a larger one is the type of the eigenvector. The second manner is flexible, because a value of the specified threshold may be set based on a requirement. For example, the specified threshold may be 0.6, 0.7, or the like. In this way, detection accuracy can be improved based on the requirement. For example, it is known that the first type is the type indicating an inaccurate observed value. It is assumed that the third membership degree value corresponding to the first type is 0.4, and the fourth membership degree value corresponding to the second type is 0.6. In the first manner, the eigenvector is of the second type, namely, the type indicating an accurate observed value. In the second manner, assuming that the second specified threshold is 0.7 (and the first specified threshold is 0.3), because the fourth membership degree value 0.6 is less than the second specified threshold 0.7 (and the third membership degree value 0.4 is greater than the first specified threshold 0.3), the eigenvector is of the first type, namely, the type indicating an inaccurate observed value. In other words, only when the fourth membership degree value is greater than or equal to 0.7, the eigenvector is of the second type, namely, the type indicating an accurate observed value. In addition, the first manner may also be considered as a case in which the specified threshold in the second manner is 0.5.

S309: Determine, when the check vector is of the first type, that the first type is the type indicating an inaccurate observed value and the second type is the type indicating an accurate observed value.

For the pseudo-range, the first type may be a gross error type (in other words, a gross error exists in an observed value), and the second type may be a non-gross error type (in other words, no gross error exists in an observed value). For the carrier phase, the first type may be a cycle slip type (in other words, a cycle slip exists in an observed value), and the second type may be a non-cycle slip type (in other words, no cycle slip exists in an observed value).

Specifically, a first membership degree value corresponding to the first type and a second membership degree value corresponding to the second type that are of the check vector may be first determined. Then, when the first membership degree value is greater than or equal to the second membership degree value, it is determined that the first type is the type indicating an inaccurate observed value and the second type is the type indicating an accurate observed value. With reference to Table 2, the first membership degree value of the check vector t is 0.8, the second membership degree value of the check vector t is 0.2, the first membership degree value is greater than the second membership degree value, and the check vector t is of the first type. Therefore, the first type corresponding to the first membership degree value is the type indicating an inaccurate observed value, and the second type corresponding to the second membership degree value is the type indicating an accurate observed value.

In other words, after the cluster analysis is performed on the check vector and the eigenvectors by using the cluster analysis algorithm, two membership degree values of the check vector may be obtained, to be specific, the first membership degree value corresponding to the first type and the second membership degree value corresponding to the second type may be obtained, where a sum of the first membership degree value and the second membership degree value is 1. Then, the first membership degree value is compared with the second membership degree value, where a type corresponding to a larger value is the type indicating an inaccurate observed value, and a type corresponding to a smaller value is the type indicating an accurate observed value.

S310: Determine, as the target navigation satellite identifier, a navigation satellite identifier corresponding to each eigenvector of the first type.

In other words, a membership degree value corresponding to the first type and a membership degree value corresponding to the second type that are of an eigenvector corresponding to each navigation satellite identifier may be first determined based on a fuzzy cluster algorithm. It is known that one of the first type and the second type is an inaccurate type (the gross error type or the cycle slip type), and the other is an accurate type (the non-gross error type or the non-cycle slip type), but which one of the first type and the second type is the inaccurate type is not determined.

In addition, a membership degree value corresponding to the first type and a membership degree value corresponding to the second type that are of the check vector may be further determined based on the fuzzy cluster algorithm. The check vector represents the accuracy of the set of the observed values of the observation parameter that are associated with the plurality of navigation satellite identifiers. The cluster analysis is performed only when an inaccurate observed value exists in the set of the observed values. Therefore, a type of the check vector that represents the accuracy of the set of the observed values is known, to be specific, is of the inaccurate type. In this case, the type of the check vector, for example, the first type, may be determined as the inaccurate type. Then, the navigation satellite identifier corresponding to each eigenvector of the first type may be determined as the target navigation satellite identifier. In other words, for each of the plurality of eigenvectors, if a type of the eigenvector is the same as the type of the check vector, a navigation satellite identifier corresponding to the eigenvector may be used as the target navigation satellite identifier.

S311: Perform selection in the plurality of navigation satellite identifiers in the satellite information of the current iteration and/or adjust a weight value associated with the target navigation satellite identifier in the satellite information of the current iteration based on the target navigation satellite identifier.

In other words, after S311 is performed, satellite information obtained after the current iteration may be determined. Specifically, in S311, performing selection in the plurality of navigation satellite identifiers in the satellite information and/or adjusting the associated weight value may include but is not limited to the following three cases:

In a first case, the target navigation satellite identifier is removed from the plurality of navigation satellite identifiers in the satellite information of the current iteration.

In a second case, the weight value of the target navigation satellite identifier in the plurality of navigation satellite identifiers in the satellite information of the current iteration is reduced.

In a third case, when there are more than two target navigation satellite identifiers, a part of target navigation satellite identifiers are removed from the plurality of navigation satellite identifiers in the satellite information of the current iteration, and weight values of the other part of target navigation satellite identifiers in the plurality of navigation satellite identifiers in the satellite information of the current iteration are reduced.

Specifically, in an example, the weight value associated with the target navigation satellite identifier may be reduced according to $w_i = \frac{\beta}{\sigma_i}$, where $\beta$ is a constant less than 1. A value of $\beta$ may be related to a membership degree value of the navigation satellite identifier corresponding to the first type, namely, the inaccurate type (the gross error type/cycle slip type).

S312: When the chi-square test succeeds, determine that the observed values of the observation parameter that are separately associated with the plurality of navigation satellite identifiers are all accurate, and determine the satellite information as valid data.

In other words, the posterior unit weighted errors of the observation parameter may be first obtained based on the satellite information of the current iteration. Then, whether an inaccurate observed value exists in the set of the observed values of the observation parameter that are separately associated with the plurality of navigation satellite identifiers may be determined based on the posterior unit weighted errors of the observation parameter. Specifically, the chi-square test may be performed on the posterior unit weighted errors of the observation parameter. If the chi-square test fails, it is determined that an inaccurate observed value exists in the set of the observed values of the observation parameter that are separately associated with the plurality of navigation satellite identifiers. Then, the cluster analysis may be performed on the check vector and the plurality of eigenvectors, and a navigation satellite identifier corresponding to each eigenvector that is of a same type as the check vector is determined as the target navigation satellite identifier. Further, the satellite information may be updated based on the target navigation satellite identifier, to determine the satellite information obtained after the current iteration, and the satellite information is iteratively updated until a chi-square test on posterior unit weighted errors of the observation parameter succeeds.

When the chi-square test succeeds, it may be determined that the observed values of the observation parameter that are separately associated with the plurality of navigation satellite identifiers are all accurate, iteration is stopped, and the satellite information is determined as valid data.

Optionally, when it is determined that a quantity of iterations reaches a specified quantity or the quantity of the plurality of navigation satellite identifiers that participate in the current iteration is less than or equal to a specified threshold, iteration is stopped, and the satellite information obtained after the current iteration is determined as valid data.

A greatest difference between this embodiment of this application and an existing related technology is that a probability that a gross error/cycle slip exists in each observed value can be quantitatively described, to avoid a determining criterion of "black or white" based on an empirical threshold in a conventional method, and provide a new weight reference value. Specifically, in this embodiment of this application, a mathematical method of fuzzy cluster analysis is applied to GNSS preprocessing to control quality of observation data. In this method, the plurality of eigenvectors and the check vector are constructed based on the residuals of the observed values and satellite geometric distribution, and the probability that a gross error or cycle slip exists in each observed value is obtained by analyzing membership degrees of the eigenvectors and the check vector. Further, a gross error/cycle slip is determined based on the probability value, to properly implement removal or weight reduction.

The following describes, based on the foregoing described data preprocessing process, a data preprocessing method provided in embodiments of this application. It may be understood that, the method is another expression manner of the data preprocessing process described above, and the method and the data preprocessing process are combined. The method is provided based on the foregoing described data preprocessing process. For some or all content of the method, refer to the foregoing descriptions of the data preprocessing process.

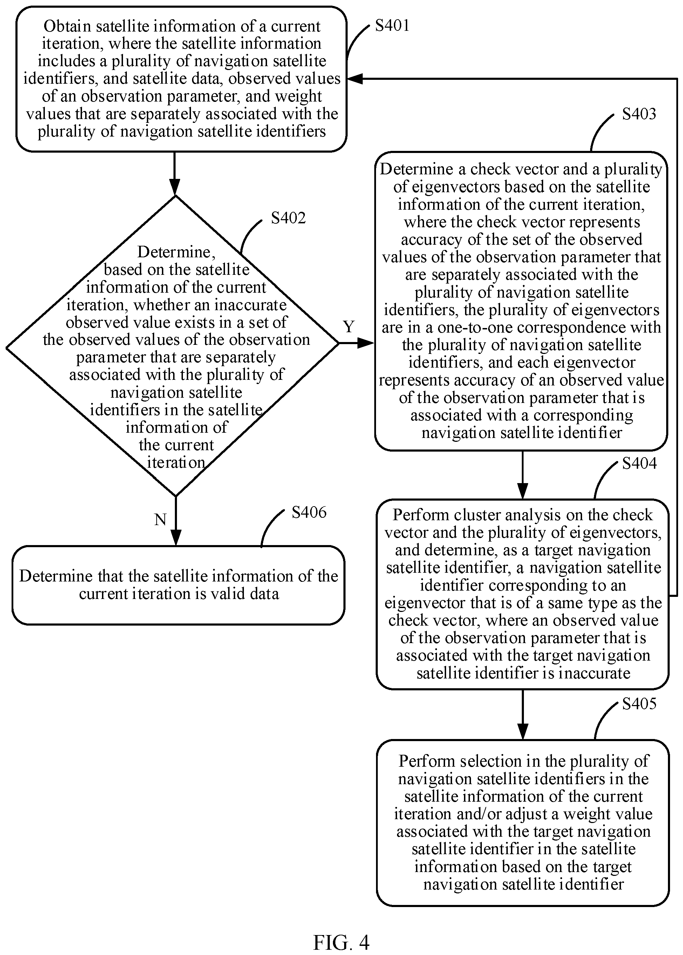

FIG. 4 is a flowchart of a data preprocessing method according to an embodiment of this application. As shown in FIG. 4, the data preprocessing method includes the following steps:

S401: Obtain satellite information of a current iteration, where the satellite information of the current iteration includes a plurality of navigation satellite identifiers, and satellite data, observed values of an observation parameter, and weight values that are separately associated with the plurality of navigation satellite identifiers.

When the current iteration is the 1st iteration, the satellite information of the current iteration is originally obtained satellite information, and the originally obtained satellite information includes a plurality of navigation satellite identifiers, and satellite data, observed values of the observation parameter, and weight values that are separately associated with the plurality of navigation satellite identifiers. When the current iteration is an Nth iteration and N is a positive integer greater than or equal to 2, the satellite information of the current iteration is satellite information obtained after a previous iteration, and satellite data and an observed value of the observation parameter that are associated with a same navigation satellite identifier remain unchanged in an iteration process.

In addition, for related content of the observation parameter (a pseudo-range or a carrier phase), the navigation satellite identifier, the satellite data, and a weight value and a measurement error of the observation parameter that are associated with a same navigation satellite identifier in an iteration process, refer to the descriptions in the foregoing data preprocessing process.

S402: Determine, based on the satellite information of the current iteration, whether an inaccurate observed value exists in a set of the observed values of the observation parameter that are separately associated with the plurality of navigation satellite identifiers in the satellite information of the current iteration. If yes, perform S403. If no, perform S405.

Each navigation satellite identifier is associated with one observed value of the observation parameter, and the plurality of navigation satellite identifiers have a plurality of observed values of the observation parameter. The "set of the observed values of the observation parameter" herein refers to the plurality of observed values of the observation parameter. In addition, for a specific process of determining "whether an inaccurate observed value exists in the set of the observed values of the observation parameter", refer to related descriptions in S302 to S306.

S403: Determine a check vector and a plurality of eigenvectors based on the satellite information of the current iteration, where the check vector represents accuracy of the set of the observed values of the observation parameter that are separately associated with the plurality of navigation satellite identifiers, the plurality of eigenvectors are in a one-to-one correspondence with the plurality of navigation satellite identifiers, and each eigenvector represents accuracy of an observed value of the observation parameter that is associated with a corresponding navigation satellite identifier. For details, refer to related descriptions in S307.

S404: Perform cluster analysis on the check vector and the plurality of eigenvectors, and determine, as a target navigation satellite identifier, a navigation satellite identifier corresponding to an eigenvector that is of a same type as the check vector, where an observed value of the observation parameter that is associated with the target navigation satellite identifier is inaccurate, and the plurality of navigation satellite identifiers in the satellite information of the current iteration include the target navigation satellite identifier. For details, refer to related descriptions in S308 to S310. In addition, the cluster analysis may be performed on the check vector and the plurality of eigenvectors by using, for example, a fuzzy mean cluster algorithm.

S405: Perform selection in the plurality of navigation satellite identifiers in the satellite information of the current iteration and/or adjust a weight value associated with the target navigation satellite identifier in the satellite information based on the target navigation satellite identifier.

For related content of performing selection in the plurality of navigation satellite identifiers and/or adjusting the weight value, refer to the foregoing three cases described in S311. Specifically, compared with the satellite information of the current iteration, a quantity of navigation satellite identifiers in satellite information obtained after the current iteration is reduced (where the target navigation satellite identifier is removed), and weight values separately associated with remaining navigation satellite identifiers remain unchanged; or a quantity of navigation satellite identifiers obtained after the current iteration remains unchanged, but the weight value associated with the target navigation satellite identifier is reduced; or a quantity of navigation satellite identifiers in satellite information obtained after the current iteration is reduced (where a part of target navigation satellite identifiers are removed), and weight values separately associated with the other part of target navigation satellite identifiers in remaining navigation satellite identifiers are reduced.

S406: Determine that the satellite information of the current iteration is valid data.

In other words, after S405 is performed, the satellite information obtained after the current iteration may be obtained. The "satellite information obtained after the current iteration" may be used as satellite information of a next iteration. If no inaccurate observed value exists in a set of observed values of the observation parameter that are separately associated with a plurality of navigation satellite identifiers in the satellite information obtained after the current iteration, that is, all observed values are accurate, the next iteration does not need to be performed, and the "satellite information obtained after the current iteration" may be used as valid data obtained after data preprocessing, to perform subsequent operations such as precise positioning.

In the data preprocessing method in this embodiment of this application, a probability that a gross error/cycle slip occurs in each observed value may be quantitatively described based on the satellite data, the observed values of the observation parameter, and the weight values in the satellite information according to a fuzzy cluster analysis method. In addition, because the satellite data includes three-dimensional coordinates of each satellite, satellite geometric distribution can be fully used. This not only avoids a determining rule of "black or white/one or the other" in a conventional method and a problem of a determining result difference caused by different thresholds, but also can provide a reference and an idea for weight value setting of a navigation satellite based on a probability value, that is, weight value setting that considers uncertainty between good and bad of an observed value of the navigation satellite. In addition, one or more navigation satellites whose observed values are inaccurate can be detected in each iteration, so that a multi-dimensional gross error or cycle slip detection success rate is improved, and validity of a processing result is ensured.

Further, data such as the observed value of the observation parameter, for example, the pseudo-range or the carrier phase, may be single-frequency data, so that a single-frequency receiver can be used. In addition, each time when different frequencies are used to repeatedly perform the method, multi-frequency detection can be implemented. Therefore, the method can be universally used for gross error identification and cycle slip detection of single-frequency/multi-frequency GNSS observation data, can provide reliable services for single-frequency/multi-frequency users, and can resolve a problem of single applicability of an existing method.

In addition, in the solution in this embodiment of this application, accuracy of pseudo-range observation data and accuracy of carrier phase observation data may be separately detected, in other words, whether a pseudo-range observed value is accurate and whether a carrier phase observed value is accurate may be separately detected. However, in an existing technology, for example, a TurboEdit method, calculation needs to be performed with reference to dual-frequency pseudo-range observed values and dual-frequency carrier phase observed values.

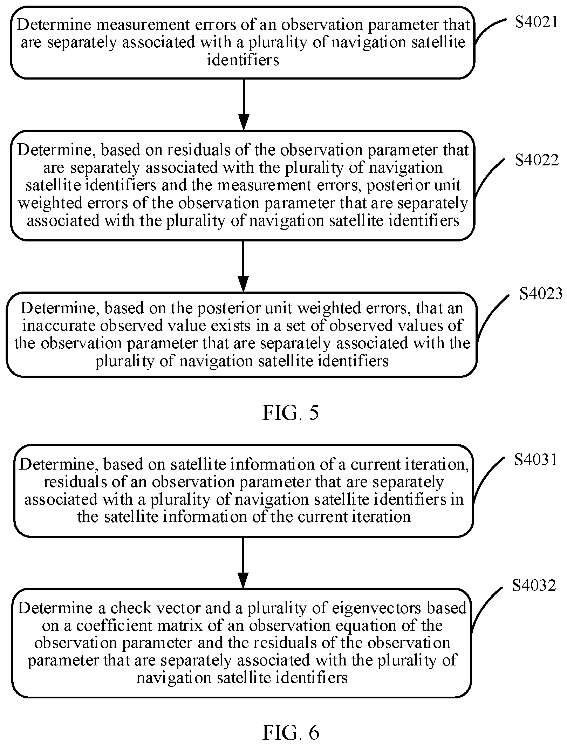

FIG. 5 is a specific flowchart of step S402 of the data preprocessing method shown in FIG. 4. As shown in FIG. 5, step S402 may specifically include the following substeps:

S4021: Determine measurement errors of the observation parameter that are separately associated with the plurality of navigation satellite identifiers.

For a manner of determining the measurement errors of the observation parameter that are separately associated with the plurality of navigation satellite identifiers, refer to the foregoing related descriptions.

S4022: Determine, based on residuals of the observation parameter that are separately associated with the plurality of navigation satellite identifiers and the measurement errors, posterior unit weighted errors of the observation parameter that are separately associated with the plurality of navigation satellite identifiers.

For a manner of determining the residuals of the observation parameter that are separately associated with the plurality of navigation satellite identifiers, refer to related descriptions in the foregoing steps S301 to S303.

S4023: Determine, based on the posterior unit weighted errors, that an inaccurate observed value exists in the set of the observed values of the observation parameter that are separately associated with the plurality of navigation satellite identifiers. For details, refer to related descriptions in S304 to S306.

In an example, determining, based on the posterior unit weighted errors, that an inaccurate observed value exists in the set of the observed values of the observation parameter that are separately associated with the plurality of navigation satellite identifiers may be specifically performed according to the following steps: performing a chi-square test on the posterior unit weighted errors of the observation parameter, where for a specific process of the chi-square test, refer to related descriptions in step S305; and when the chi-square test fails, determining that an inaccurate observed value exists in the set of the observed values of the observation parameter that are separately associated with the plurality of navigation satellite identifiers.

In addition, when the chi-square test succeeds, it may be determined that the observed values of the observation parameter that are separately associated with the plurality of navigation satellite identifiers are all accurate, iteration is stopped, and satellite information obtained after a previous iteration is determined as valid data.

Optionally, when it is determined that a quantity of iterations reaches a specified quantity or a quantity of a plurality of navigation satellite identifiers in the satellite information obtained after the current iteration is less than or equal to a specified threshold, iteration is stopped, and the satellite information obtained after the current iteration is determined as valid data.

FIG. 6 is a specific flowchart of step S403 of the data preprocessing method shown in FIG. 4. As shown in FIG. 6, S403 may specifically include the following substeps:

S4031: Determine, based on the satellite information of the current iteration, residuals of the observation parameter that are separately associated with the plurality of navigation satellite identifiers in the satellite information of the current iteration.

For a manner of determining the residuals of the observation parameter that are separately associated with the plurality of navigation satellite identifiers, refer to related descriptions in the foregoing steps S301 to S303.

S4032: Determine the check vector and the plurality of eigenvectors based on a coefficient matrix of an observation equation of the observation parameter and the residuals of the observation parameter that are separately associated with the plurality of navigation satellite identifiers.

Specifically, for a process of determining the check vector and the plurality of eigenvectors, refer to related descriptions of step S307.

Samples may be constructed based on the residuals of the observation parameter and the coefficient matrix of the observation equation, to perform cluster analysis on the plurality of target navigation satellite identifiers. The residual may reflect a difference between an actual observed value and an estimated value. In addition, coordinate locations of satellites are used in a residual calculation process, and the coordinate locations of the satellites are also used in the coefficient matrix (the foregoing matrix A formed by $l_x^i, l_y^i$, and $l_z^i$) of the observation equation. In this way, the satellite geometric distribution can be fully used, to improve accuracy of finding observation data having a gross error or cycle slip, and therefore ensure the validity of the processing result.

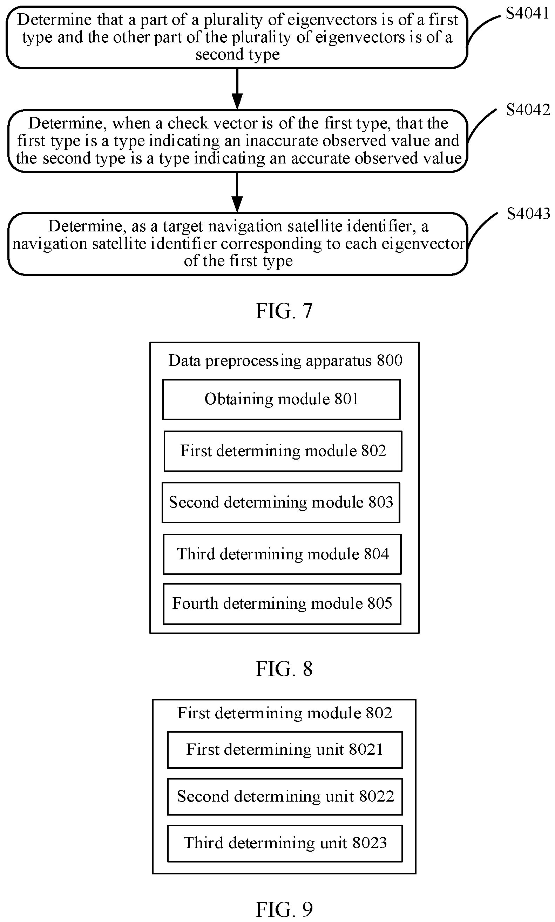

FIG. 7 is a specific flowchart of step S404 of the data preprocessing method shown in FIG. 4. As shown in FIG. 7, S404 may specifically include the following substeps:

S4041: Determine that a part of the plurality of eigenvectors is of a first type and the other part of the plurality of eigenvectors is of a second type.

S4042: Determine, when the check vector is of the first type, that the first type is a type indicating an inaccurate observed value and the second type is a type indicating an accurate observed value.

S4043: Determine, as the target navigation satellite identifier, a navigation satellite identifier corresponding to each eigenvector of the first type.

Specifically, for a process of performing cluster analysis on the check vector and the plurality of eigenvectors in S404, refer to the foregoing steps S308 to S310.

According to the navigation satellite single-frequency/multi-frequency observation data preprocessing method that is based on fuzzy cluster analysis provided in this embodiment of this application, first, pseudo-ranges and/or carrier phases of all visible navigation satellites are used to perform positioning solution, to obtain posterior unit weighted errors of pseudo-range single-point positioning of a current epoch and/or posterior unit weighted errors of inter-epoch differential carrier phase observed value single-point positioning. Then, a chi-square test is performed on the posterior unit weighted errors, to determine whether a gross error exists in a pseudo-range observed value of the current epoch and/or whether a cycle slip occurs in a carrier phase observed value. If a gross error or cycle slip exists, sample construction is performed based on a corresponding observation equation and the posterior unit weighted errors, to obtain a check vector and a plurality of eigenvectors that are in a one-to-one correspondence with a plurality of observed values. Membership degree values of the plurality of eigenvectors and the check vector in samples are calculated based on a fuzzy cluster algorithm, and a probability that a gross error or cycle slip exists in each observed value is determined by analyzing membership degrees of an eigenvector corresponding to each observed value and the check vector, to implement removal or weight reduction. This implements gross error identification and cycle slip detection of single-frequency/multi-frequency observation data of a navigation satellite. In addition, the probability that a gross error/cycle slip occurs in each observed value may be quantitatively described according to a fuzzy cluster analysis method. In this way, observation data having a gross error or cycle slip can be accurately found, a determining criterion of "black or white/one or the other" in a conventional method does not need to be used, and a problem of a determining result difference caused by different thresholds is avoided. In addition, a weight value may be set for the navigation satellite based on a probability value of uncertainty between good and bad of an observed value associated with a navigation satellite identifier, so that validity of a processing result can be ensured. Further, the observed value of the observation parameter may be single-frequency data, so that a single-frequency receiver can be used. In addition, one or more navigation satellites whose observed values are inaccurate may be detected each time, so that multi-dimensional gross error or cycle slip detection efficiency is improved, detection accuracy is high, and reliable services can be provided for single-frequency/multi-frequency users.

Based on the data preprocessing method in the foregoing embodiment, an embodiment of this application provides a data preprocessing apparatus. FIG. 8 is a schematic diagram of a structure of the data preprocessing apparatus according to this embodiment of this application. As shown in FIG. 8, the data preprocessing apparatus 800 can perform at least one iteration, and may include an obtaining module 801, a first determining module 802, a second determining module 803, a third determining module 804, and a fourth determining module 805.

The obtaining module 801 is configured to obtain satellite information of a current iteration, where the satellite information of the current iteration includes a plurality of navigation satellite identifiers, and satellite data, observed values of an observation parameter, and weight values that are separately associated with the plurality of navigation satellite identifiers.

Specifically, when the current iteration is the $1^{st}$ iteration, the satellite information of the current iteration is originally obtained satellite information, and the originally obtained satellite information includes a plurality of navigation satellite identifiers, and satellite data, observed values of the observation parameter, and weight values that are separately associated with the plurality of navigation satellite identifiers. When the current iteration is an $N^{th}$ iteration and N is a positive integer greater than or equal to 2, the satellite information of the current iteration is satellite information obtained after a previous iteration, and satellite data and an observed value of the observation parameter that are associated with a same navigation satellite identifier remain unchanged in an iteration process.

The first determining module 802 is configured to determine, based on the satellite information of the current iteration, whether an inaccurate observed value exists in a set of the observed values of the observation parameter that are separately associated with the plurality of navigation satellite identifiers in the satellite information of the current iteration.

The first determining module 802 is further configured to: when a determining result is No, determine that the satellite information of the current iteration is valid data.

The second determining module 803 is configured to: when the determining result of the first determining module 802 is Yes (in other words, an inaccurate observed value exists in the set of the observed values of the observation parameter), determine a check vector and a plurality of eigenvectors based on the satellite information of the current iteration. The check vector represents accuracy of the set of the observed values of the observation parameter that are separately associated with the plurality of navigation satellite identifiers, the plurality of eigenvectors are in a one-to-one correspondence with the plurality of navigation satellite identifiers, and each eigenvector represents accuracy of an observed value of the observation parameter that is associated with a corresponding navigation satellite identifier.

The third determining module 804 is configured to: perform cluster analysis on the check vector and the plurality of eigenvectors, and determine, as a target navigation satellite identifier, a navigation satellite identifier corresponding to an eigenvector that is of a same type as the check vector, where an observed value of the observation parameter that is associated with the target navigation satellite identifier is inaccurate, and the plurality of navigation satellite identifiers in the satellite information of the current iteration include the target navigation satellite identifier.

The fourth determining module 805 is configured to perform selection in the plurality of navigation satellite identifiers in the satellite information of the current iteration and/or adjust a weight value associated with the target navigation satellite identifier in the satellite information based on the target navigation satellite identifier, to determine satellite information obtained after the current iteration.

The obtaining module 801, the first determining module 802, the second determining module 803, the third determining module 804, and the fourth determining module 805 cooperate with each other to implement iterative processing until a preset iteration stop condition is met.

FIG. 9 is a schematic diagram of a specific structure of the first determining module 802 in the data preprocessing apparatus shown in FIG. 8. As shown in FIG. 9, the first determining module 802 includes a first determining unit 8021, a second determining unit 8022, and a third determining unit 8023.

The first determining unit 8021 is configured to determine measurement errors of the observation parameter that are separately associated with the plurality of navigation satellite identifiers.

For a manner of determining the measurement errors of the observation parameter that are separately associated with the plurality of navigation satellite identifiers, refer to the foregoing related descriptions.

The second determining unit 8022 is configured to determine, based on residuals of the observation parameter that are separately associated with the plurality of navigation satellite identifiers and the measurement errors, posterior unit weighted errors of the observation parameter that are separately associated with the plurality of navigation satellite identifiers.

For a manner of determining the residuals of the observation parameter that are separately associated with the plurality of navigation satellite identifiers, refer to related descriptions in S301 to S303.

The third determining unit 8023 is configured to determine, based on the posterior unit weighted errors, that an inaccurate observed value exists in the set of the observed values of the observation parameter that are separately associated with the plurality of navigation satellite identifiers. For details, refer to related descriptions in S304 to S306.

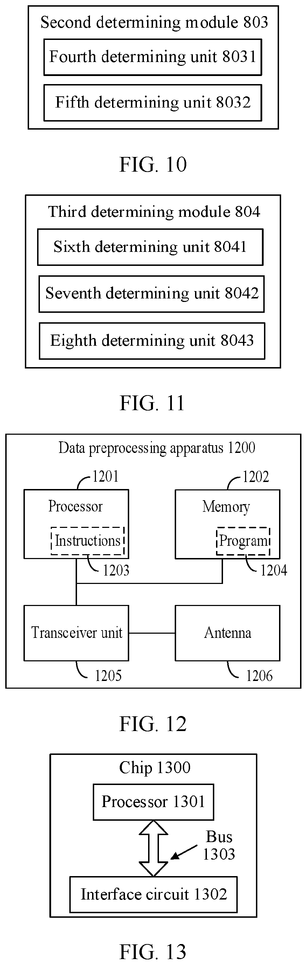

FIG. 10 is a schematic diagram of a specific structure of the second determining module 803 in the data preprocessing apparatus shown in FIG. 8. As shown in FIG. 10, the second determining module 803 includes a fourth determining unit 8031 and a fifth determining unit 8032.

The fourth determining unit 8031 is configured to determine, based on the satellite information of the current iteration, residuals of the observation parameter that are separately associated with the plurality of navigation satellite identifiers in the satellite information of the current iteration. For details, refer to related descriptions in S301 to S303.

The fifth determining unit 8032 is configured to determine the check vector and the plurality of eigenvectors based on a coefficient matrix of an observation equation of the observation parameter and the residuals of the observation parameter that are separately associated with the plurality of navigation satellite identifiers. For details, refer to related descriptions in S307.

FIG. 11 is a schematic diagram of a specific structure of the third determining module 804 in the data preprocessing apparatus shown in FIG. 8. As shown in FIG. 11, the third determining module 804 includes a sixth determining unit 8041, a seventh determining unit 8042, and an eighth determining unit 8043.

The sixth determining unit 8041 is configured to determine that a part of the plurality of eigenvectors is of a first type and the other part of the plurality of eigenvectors is of a second type.

The seventh determining unit 8042 is configured to determine, when the check vector is of the first type, that the first type is a type indicating an inaccurate observed value and the second type is a type indicating an accurate observed value.

The eighth determining unit 8043 is configured to determine, as the target navigation satellite identifier, a navigation satellite identifier corresponding to each eigenvector of the first type.

Specifically, for a process in which the third determining module 804 performs cluster analysis on the check vector and the plurality of eigenvectors, refer to related descriptions in S308 to S310.

It should be understood that the foregoing apparatus is configured to perform the method in the foregoing embodiment, and an implementation principle and a technical effect of a corresponding program module in the apparatus are similar to the descriptions in the foregoing method. For a working process of the apparatus, refer to a corresponding process in the foregoing method. Details are not described herein again.

Based on the method in the foregoing embodiment, an embodiment of this application further provides another data preprocessing apparatus. FIG. 12 is a schematic diagram of a structure of the another data preprocessing apparatus according to this embodiment of this application. As shown in FIG. 12, the data preprocessing apparatus 1200 provided in this embodiment of this application may be configured to implement the method described in the foregoing method embodiment.

The data preprocessing apparatus includes at least one processor 1201. The at least one processor 1201 may support the data preprocessing apparatus in implementing the method provided in embodiments of this application. The processor 1201 may store instructions 1203.

The processor 1201 may be a general-purpose processor or a dedicated processor. For example, the processor 1201 may include a central processing unit (central processing unit, CPU) and/or a baseband processor. The baseband processor may be configured to process communication data (for example, determine a target screen terminal), and the CPU may be configured to implement corresponding control and processing functions, execute a software program, and process data of the software program.

Further, the data preprocessing apparatus may include a transceiver unit 1205, configured to implement signal input (receiving) and output (sending). For example, the transceiver unit 1205 may include a transceiver or a radio frequency chip. The transceiver unit 1205 may further include a communication interface.

Optionally, the data preprocessing apparatus may further include an antenna 1206, configured to support the transceiver unit 1205 in implementing receiving and sending functions of the data preprocessing apparatus.

Optionally, the data preprocessing apparatus may include one or more memories 1202 that store a program (or may be instructions or code) 1204. The program 1204 may be run by the processor 1201, so that the processor 1201 performs the method described in the foregoing method embodiment. Optionally, the memory 1202 may further store data. Optionally, the processor 1201 may further read the data stored in the memory 1202. The data and the program 1204 may be stored at a same storage address, or the data and the program 1204 may be stored at different storage addresses.

The processor 1201 and the memory 1202 may be disposed separately, or may be integrated together, for example, integrated on a board or integrated into a system on chip (system on chip, SOC).

For detailed descriptions of operations performed by the data preprocessing apparatus in the foregoing possible designs, refer to the descriptions in the embodiment of the data preprocessing method provided in embodiments of this application. Details are not described herein again.

Based on the method in the foregoing embodiment, an embodiment of this application further provides a chip. FIG. 13 is a schematic diagram of a structure of the chip according to this embodiment of this application. As shown in FIG. 13, the chip 1300 includes one or more processors 1301 and an interface circuit 1302. Optionally, the chip 1300 may further include a bus 1303.

The processor 1301 may be an integrated circuit chip and has a signal processing capability. In an implementation process, steps of the foregoing method may be completed by using an integrated logic circuit of hardware in the processor 1301 or instructions in a form of software. The processor 1301 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods and steps that are disclosed in embodiments of this application. The general-purpose processor may be a microprocessor, or the processor may be any conventional processor or the like.

The interface circuit 1302 may be configured to send or receive data, an instruction, or information. The processor 1301 may perform processing by using the data, the instruction, or other information received by the interface circuit 1302, and may send processing completion information through the interface circuit 1302.

Optionally, the chip 1300 further includes a memory. The memory may include a read-only memory and a random access memory, and provide operation instructions and data for the processor. A part of the memory may further include a non-volatile random access memory (NVRAM).

Optionally, the memory stores an executable software module or a data structure, and the processor may perform a corresponding operation by invoking operation instructions (where the operation instructions may be stored in an operating system) stored in the memory.

Optionally, the interface circuit 1302 may be configured to output an execution result of the processor 1301.

It should be noted that functions corresponding to each of the processor 1301 and the interface circuit 1302 may be implemented by using a hardware design, may be implemented by using a software design, or may be implemented by combining software and hardware. This is not limited herein.

In addition, steps in the foregoing method embodiment may be implemented by using a logic circuit in a hardware form or instructions in a software form in the processor. The chip may be used in the receiver shown in FIG. 1.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, the storage medium is coupled to the processor, so that the processor can read information from the storage medium or write information into the storage medium. Certainly, the storage medium may alternatively be a component of the processor. The processor and the storage medium may be located in an ASIC.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

It may be understood that various numbers in embodiments of this application are merely used for differentiation for ease of description, and are not used to limit the scope of embodiments of this application.

## Claims

**1.** A data preprocessing method, comprising performing at least one iteration, wherein each iteration comprises:

obtaining satellite information of a current iteration, wherein the satellite information comprises a plurality of navigation satellite identifiers, and satellite data, observed values of an observation parameter, and weight values that are separately associated with the plurality of navigation satellite identifiers;
when determining that an inaccurate observed value exists in a set of the observed values of the observation parameter that are separately associated with the plurality of navigation satellite identifiers in the satellite information of the current iteration, determining a check vector and a plurality of eigenvectors based on the satellite information of the current iteration, wherein the check vector represents accuracy of the set of the observed values of the observation parameter that are separately associated with the plurality of navigation satellite identifiers, the plurality of eigenvectors are in a one-to-one correspondence with the plurality of navigation satellite identifiers, and each eigenvector represents accuracy of an observed value of the observation parameter that is associated with a corresponding navigation satellite identifier;
performing cluster analysis on the check vector and the plurality of eigenvectors, and determining, as a target navigation satellite identifier, a navigation satellite identifier corresponding to an eigenvector that is of a same type as the check vector, wherein an observed value of the observation parameter that is associated with the target navigation satellite identifier is inaccurate; and
performing selection in the plurality of navigation satellite identifiers in the satellite information of the current iteration and/or adjusting a weight value associated with the target navigation satellite identifier in the satellite information based on the target navigation satellite identifier.

**2.** The data preprocessing method according to claim 1, wherein

when the current iteration is the 1st iteration, the satellite information of the current iteration is originally obtained satellite information, and the originally obtained satellite information comprises a plurality of navigation satellite identifiers, and satellite data, observed values of the observation parameter, and weight values that are separately associated with the plurality of navigation satellite identifiers; and

when the current iteration is an Nth iteration and N is a positive integer greater than or equal to 2, the satellite information of the current iteration is satellite information obtained after a previous iteration, and satellite data and an observed value of the observation parameter that are associated with a same navigation satellite identifier remain unchanged in an iteration process.

3. The data preprocessing method according to claim 1, wherein the determining a check vector and a plurality of eigenvectors based on the satellite information of the current iteration comprises:

determining, based on the satellite information of the current iteration, residuals of the observation parameter that are separately associated with the plurality of navigation satellite identifiers in the satellite information of the current iteration; and
determining the check vector and the plurality of eigenvectors based on a coefficient matrix of an observation equation of the observation parameter and the residuals of the observation parameter that are separately associated with the plurality of navigation satellite identifiers.

4. The data preprocessing method according to claim 3, wherein the determining the check vector and the plurality of eigenvectors based on a coefficient matrix of an observation equation of the observation parameter and the residuals of the observation parameter that are separately associated with the plurality of navigation satellite identifiers comprises:

performing QR decomposition on the coefficient matrix $A_{n \times k}$ of the observation equation of the observation parameter to obtain a matrix $Q_{n \times n}$, wherein $A_{n \times k}=Q_{n \times n} \times R_{n \times k}$, n is a quantity of the plurality of navigation satellite identifiers, and k is a quantity of unknown numbers in the observation equation of the observation parameter;
selecting a $(k+1)^{th}$ row to an $n^{th}$ row of a matrix $Q^T$ to form a submatrix $T_{(n-k) \times n}$;
for each of the plurality of navigation satellite identifiers, multiplying each column of the submatrix $T_{(n-k) \times n}$ by a residual of the observation parameter that is associated with the corresponding navigation satellite identifier in sequence to obtain an eigenvector corresponding to the navigation satellite identifier; and
multiplying the submatrix $T_{(n-k) \times n}$ by a residual vector of the observation parameter to obtain the check vector, wherein the residual vector of the observation parameter is a column vector formed by sequentially arranging the residuals of the observation parameter that are associated with the plurality of navigation satellite identifiers.

5. The data preprocessing method according to claim 1, wherein the performing cluster analysis on the check vector and the plurality of eigenvectors, and determining, as a target navigation satellite identifier, a navigation satellite identifier corresponding to an eigenvector that is of a same type as the check vector comprises:

determining that a part of the plurality of eigenvectors is of a first type and the other part of the plurality of eigenvectors is of a second type;
determining, when the check vector is of the first type, that the first type is a type indicating an inaccurate observed value and the second type is a type indicating an accurate observed value; and
determining, as the target navigation satellite identifier, a navigation satellite identifier corresponding to each eigenvector of the first type.

6. The data preprocessing method according to claim 5, wherein the determining, when the check vector is of the first type, that the first type is a type indicating an inaccurate observed value and the second type is a type indicating an accurate observed value comprises:

determining a first membership degree value corresponding to the first type and a second membership degree value corresponding to the second type that are of the check vector; and
when the first membership degree value is greater than the second membership value, determining that the first type is the type indicating an inaccurate observed value and the second type is the type indicating an accurate observed value.

7. The data preprocessing method according to claim 5, wherein the determining that a part of the plurality of eigenvectors is of a first type and the other part of the plurality of eigenvectors is of a second type comprises:

for each of the plurality of eigenvectors, determining a third membership degree value corresponding to the first type and a fourth membership degree value corresponding to the second type that are of the eigenvector, and determining, based on the third membership degree value and the fourth membership degree value, that the eigenvector is of the first type or the second type.

8. The data preprocessing method according to claim 7, wherein the determining, based on the third membership degree value and the fourth membership degree value, that the eigenvector is of the first type or the second type comprises:

when the third membership degree value is greater than or equal to the fourth membership degree value, determining that the eigenvector is of the first type; and
when the third membership degree value is less than the fourth membership degree value, determining that the eigenvector is of the second type; or
when the third membership degree value is greater than or equal to a first specified threshold, determining that the eigenvector is of the first type; and
when the third membership degree value is less than the first specified threshold, determining that the eigenvector is of the second type; or
when the fourth membership degree value is less than a second specified threshold, determining that the eigenvector is of the first type; and
when the fourth membership degree value is greater than or equal to the second specified threshold, determining that the eigenvector is of the second type.

9. The data preprocessing method according to any one of claims 1 to 8, wherein the determining that an inaccurate observed value exists in a set of the observed values of the observation parameter that are separately of the plurality of navigation satellite identifiers comprises:

determining measurement errors of the observation parameter that are separately associated with the plurality of navigation satellite identifiers;
determining, based on the residuals of the observation parameter that are separately associated with the plurality of navigation satellite identifiers and the measurement errors, posterior unit weighted errors of the observation parameter that are separately associated with the plurality of navigation satellite identifiers; and
determining, based on the posterior unit weighted errors, that an inaccurate observed value exists in the set of the observed values of the observation parameter that are separately associated with the plurality of navigation satellite identifiers.

10. The data preprocessing method according to claim 9, wherein for a same navigation satellite identifier:

when the 1st iteration is performed, a measurement error of the observation parameter that is associated with each of the plurality of navigation satellite identifiers is $\sigma_i$, wherein $\sigma_i = \sigma_0$ or $\sigma_i = \dfrac{\sigma_0}{\sin{(ele)}}$ , and an associated weight value is a reciprocal of the associated measurement error of the observation parameter; and
when the Nth iteration is performed and N is a positive integer greater than or equal to 2, when the associated weight value is adjusted in a previous iteration process, the associated measurement error of the observation parameter is correspondingly adjusted based on a function relationship, wherein the function relationship is that the associated weight value is a reciprocal of the associated measurement error of the observation parameter, wherein
$\sigma_0$ represents a measurement error standard deviation of the observation parameter, sin represents a sine function, and $ele$ represents an altitude angle of a navigation satellite with a unit of rad.

11. The data preprocessing method according to claim 9, wherein the determining, based on the posterior unit weighted errors, that an inaccurate observed value exists in the set of the observed values of the observation parameter that are separately associated with the plurality of navigation satellite identifiers comprises:

performing a chi-square test on the posterior unit weighted errors of the observation parameter; and
when the chi-square test fails, determining that an inaccurate observed value exists in the set of the observed values of the observation parameter that are separately associated with the plurality of navigation satellite identifiers.

**12.** The data preprocessing method according to claim 11, wherein the method further comprises:
when the chi-square test succeeds, determining that the observed values of the observation parameter that are separately associated with the plurality of navigation satellite identifiers are all accurate, stopping iteration, and determining satellite information obtained after a previous iteration as valid data.

**13.** The data preprocessing method according to claim 11, wherein the performing a chi-square test on the posterior unit weighted errors of the observation parameter comprises:

using a redundant observation parameter as a degree of freedom, wherein the redundant observation parameter is the quantity of the plurality of navigation satellite identifiers minus the quantity of unknown parameters in the observation equation of the observation parameter;
determining a confidence level based on the observation parameter;
querying a chi-square distribution table based on the degree of freedom and the confidence level, to determine a theoretical value of the chi-square test; and
determining whether the chi-square test succeeds based on a comparison result between the posterior unit weighted errors and the theoretical value.

**14.** The data preprocessing method according to any one of claims 1 to 10, wherein the data preprocessing method further comprises:

stopping iteration when determining that a quantity of iterations reaches a specified quantity or determining that a quantity of a plurality of navigation satellite identifiers in satellite information obtained after the current iteration is less than or equal to a specified threshold; and
determining the satellite information obtained after the current iteration as valid data.

**15.** The data preprocessing method according to any one of claims 3 to 14, wherein the determining, based on the satellite information of the current iteration, residuals of the observation parameter that are separately associated with the plurality of navigation satellite identifiers in the satellite information of the current iteration comprises:

determining a positioning solution result based on the observation equation of the observation parameter and the satellite information of the current iteration; and
for each of the plurality of navigation satellite identifiers: determining, based on the positioning solution result, the observation equation of the observation parameter, and satellite data associated with the navigation satellite identifier, a theoretical calculated value of the observation parameter that is associated with the navigation satellite identifier; and using a difference between an observed value of the observation parameter and the theoretical calculated value of the observation parameter as a residual of the observation parameter that is associated with the navigation satellite identifier.

**16.** The data preprocessing method according to claim 15, wherein the observation parameter is a pseudo-range, and the determining a positioning solution result based on the observation equation of the observation parameter and the satellite information comprises:

expanding a pseudo-range observation equation into a linearized form by using Taylor series; and
determining the positioning solution result based on the linearized pseudo-range observation equation and the satellite information by using a weighted least square method.

**17.** The data preprocessing method according to claim 15, wherein the observation parameter is a carrier phase, and the determining a positioning solution result based on the observation equation of the observation parameter and the satellite information comprises:

performing a subtraction operation on a carrier observation equation of a current epoch and a carrier observation equation of a previous epoch to obtain an inter-epoch single-difference carrier observation equation;
performing linearization processing on the inter-epoch single-difference carrier observation equation; and
determining the positioning solution result based on the linearized inter-epoch single-difference carrier observation equation and the satellite information by using a weighted least square method.

18. The data preprocessing method according to any one of claims 1 to 15, wherein

the observation parameter is a pseudo-range, that an observed value of the observation parameter is inaccurate comprises that a gross error exists in an observed value of the pseudo-range, and that an observed value of the observation parameter is accurate comprises that no gross error exists in an observed value of the pseudo-range; and/or
the observation parameter is a carrier phase, that an observed value of the observation parameter is inaccurate comprises that a cycle slip exists in an observed value of the carrier phase, and that an observed value of the observation parameter is accurate comprises that no cycle slip exists in an observed value of the carrier phase.

19. The data preprocessing method according to any one of claims 1 to 18, wherein the performing selection in the plurality of navigation satellite identifiers in the satellite information of the current iteration and/or adjusting a weight value associated with the target navigation satellite identifier in the satellite information based on the target navigation satellite identifier comprises:

removing the target navigation satellite identifier from the plurality of navigation satellite identifiers in the satellite information of the current iteration;
reducing the weight value of the target navigation satellite identifier in the plurality of navigation satellite identifiers in the satellite information of the current iteration; or
when there are more than two target navigation satellite identifiers, removing a part of target navigation satellite identifiers from the plurality of navigation satellite identifiers in the satellite information of the current iteration, and reducing weight values of the other part of target navigation satellite identifiers in the plurality of navigation satellite identifiers in the satellite information of the current iteration.

20. The data preprocessing method according to any one of claims 1 to 19, wherein

the observed value of the observation parameter is single-frequency data; and/or
the satellite data comprises three-dimensional coordinates and positioning error data of a navigation satellite indicated by the navigation satellite identifier.

21. A data preprocessing apparatus, comprising:

at least one memory, configured to store a program; and
at least one processor, configured to execute the program stored in the memory, wherein when the program stored in the memory is executed, the processor is configured to perform the method according to any one of claims 1 to 20.

22. A chip, used in an electronic device, comprising an interface and one or more processors, wherein

the interface is configured to receive code instructions and transmit the code instructions to the processor; and
the processor is configured to run the code instructions, to enable the electronic device to perform the method according to any one of claims 1 to 20.

23. A computer-readable storage medium, wherein the computer-readable storage medium stores a computer program; and when the computer program is executed on a computer, the computer is enabled to perform the method according to any one of claims 1 to 20.

24. A computer program product comprising instructions, wherein when the instructions are run on a computer, the computer is enabled to perform the method according to any one of claims 1 to 20.

Satellite 2
(x2, y2, z2)

Satellite 3
(x3, y3, z3)

Satellite 1
(x1, y1, z1)

Satellite 4
(x4, y4, z4)

d2

d3

d1

d4

Receiver
(x, y, z)

FIG. 1

Input dual-frequency code pseudo-ranges and carrier phases of all satellites in a current epoch t — S201

Select one satellite from all the satellites, and determine an MW combination observed value of the satellite — S202

Determine whether a data interruption time interval of the satellite is greater than a threshold tolTime — S203

Y

N

Determine a difference between the MW combination observed value of the current epoch t and an average value of MW combination observed values that is calculated in a previous epoch — S204

Determine whether an absolute value of the difference is greater than a specified threshold tolRange — S205

Y

N

Perform cycle slip detection on a next satellite, until all the observation satellites of the current epoch t are traversed — S209

Determine that no cycle slip exists — S206

Determine that a cycle slip exists — S207

Update an average value and a standard deviation of MW combination observed values by using recursion formulas — S208

FIG. 2

Obtain satellite information of a current iteration, where the satellite information includes a plurality of navigation satellite identifiers, and satellite data, observed values of an observation parameter, and weight values that are separately associated with the plurality of navigation satellite identifiers — S300

Determine measurement errors of the observation parameter that are separately associated with the plurality of navigation satellite identifiers in the satellite information of the current iteration, where for a same navigation satellite identifier, an associated weight value is a reciprocal of an associated measurement error of the observation parameter — S301

Determine a positioning solution result based on an observation equation of the observation parameter and the satellite information of the current iteration — S302

For each of the plurality of navigation satellite identifiers, determine, based on the positioning solution result, the observation equation of the observation parameter, and satellite data associated with the navigation satellite identifier, a theoretical calculated value of the observation parameter that is associated with the navigation satellite identifier, and use a difference between an observed value of the observation parameter and the theoretical calculated value of the observation parameter as a residual of the observation parameter that is associated with the navigation satellite identifier — S303

Determine, based on residuals of the observation parameter that are separately associated with the plurality of navigation satellite identifiers and the measurement errors, posterior unit weighted errors of the observation parameter that are separately associated with the plurality of navigation satellite identifiers — S304

Determine whether a chi-square test on the posterior unit weighted errors of the observation parameter succeeds — S305

N →

Determine that an inaccurate observed value exists in a set of the observed values of the observation parameter that are separately associated with the plurality of navigation satellite identifiers — S306

TO FIG. 3B

TO FIG. 3B

FIG. 3A

CONT. FROM
FIG. 3A

CONT. FROM
FIG. 3A

S307

Determine a check vector and a plurality of eigenvectors based on a coefficient matrix of the observation equation of the observation parameter and the residuals of the observation parameter that are separately associated with the plurality of navigation satellite identifiers, where the check vector represents accuracy of the set of the observed values of the observation parameter that are separately associated with the plurality of navigation satellite identifiers, the plurality of eigenvectors are in a one-to-one correspondence with the plurality of navigation satellite identifiers, and each eigenvector represents accuracy of an observed value of the observation parameter that is associated with a corresponding navigation satellite identifier

Y

S312

Determine that the observed values of the observation parameter that are separately associated with the plurality of navigation satellite identifiers are all accurate, and determine the satellite information as valid data

S308

Determine that a part of the plurality of eigenvectors is of a first type and the other part of the plurality of eigenvectors is of a second type

S309

Determine, when the check vector is of the first type, that the first type is a type indicating an inaccurate observed value and the second type is a type indicating an accurate observed value

S310

Determine, as a target navigation satellite identifier, a navigation satellite identifier corresponding to each eigenvector of the first type

S311

Perform selection in the plurality of navigation satellite identifiers in the satellite information of the current iteration and/or adjust a weight value associated with the target navigation satellite identifier in the satellite information of the current iteration based on the target navigation satellite identifier

FIG. 3B

Obtain satellite information of a current iteration, where the satellite information includes a plurality of navigation satellite identifiers, and satellite data, observed values of an observation parameter, and weight values that are separately associated with the plurality of navigation satellite identifiers

S401

Determine, based on the satellite information of the current iteration, whether an inaccurate observed value exists in a set of the observed values of the observation parameter that are separately associated with the plurality of navigation satellite identifiers in the satellite information of the current iteration

S402

Y

Determine a check vector and a plurality of eigenvectors based on the satellite information of the current iteration, where the check vector represents accuracy of the set of the observed values of the observation parameter that are separately associated with the plurality of navigation satellite identifiers, the plurality of eigenvectors are in a one-to-one correspondence with the plurality of navigation satellite identifiers, and each eigenvector represents accuracy of an observed value of the observation parameter that is associated with a corresponding navigation satellite identifier

S403

Perform cluster analysis on the check vector and the plurality of eigenvectors, and determine, as a target navigation satellite identifier, a navigation satellite identifier corresponding to an eigenvector that is of a same type as the check vector, where an observed value of the observation parameter that is associated with the target navigation satellite identifier is inaccurate

S404

N

Determine that the satellite information of the current iteration is valid data

S406

Perform selection in the plurality of navigation satellite identifiers in the satellite information of the current iteration and/or adjust a weight value associated with the target navigation satellite identifier in the satellite information based on the target navigation satellite identifier

S405

FIG. 4

EP 4 421 534 A1

Determine measurement errors of an observation parameter that are separately associated with a plurality of navigation satellite identifiers    S4021

Determine, based on residuals of the observation parameter that are separately associated with the plurality of navigation satellite identifiers and the measurement errors, posterior unit weighted errors of the observation parameter that are separately associated with the plurality of navigation satellite identifiers    S4022

Determine, based on the posterior unit weighted errors, that an inaccurate observed value exists in a set of observed values of the observation parameter that are separately associated with the plurality of navigation satellite identifiers    S4023

FIG. 5

Determine, based on satellite information of a current iteration, residuals of an observation parameter that are separately associated with a plurality of navigation satellite identifiers in the satellite information of the current iteration    S4031

Determine a check vector and a plurality of eigenvectors based on a coefficient matrix of an observation equation of the observation parameter and the residuals of the observation parameter that are separately associated with the plurality of navigation satellite identifiers    S4032

FIG. 6

Determine that a part of a plurality of eigenvectors is of a first type and the other part of the plurality of eigenvectors is of a second type — S4041

Determine, when a check vector is of the first type, that the first type is a type indicating an inaccurate observed value and the second type is a type indicating an accurate observed value — S4042

Determine, as a target navigation satellite identifier, a navigation satellite identifier corresponding to each eigenvector of the first type — S4043

FIG. 7

Data preprocessing apparatus 800

Obtaining module 801

First determining module 802

Second determining module 803

Third determining module 804

Fourth determining module 805

FIG. 8

First determining module 802

First determining unit 8021

Second determining unit 8022

Third determining unit 8023

FIG. 9

Second determining module 803

Fourth determining unit 8031

Fifth determining unit 8032

FIG. 10

Third determining module 804

Sixth determining unit 8041

Seventh determining unit 8042

Eighth determining unit 8043

FIG. 11

Data preprocessing apparatus 1200

1201

Processor

Instructions

1203

1202

Memory

Program

1204

Transceiver unit

1205

Antenna

1206

FIG. 12

Chip 1300

Processor 1301

Bus
1303

Interface circuit 1302

FIG. 13

<div align="center">INTERNATIONAL SEARCH REPORT</div>

| International application No. |
|---|
| **PCT/CN2021/142813** |

**A. CLASSIFICATION OF SUBJECT MATTER**

G01S 19/37(2010.01)i

According to International Patent Classification (IPC) or to both national classification and IPC

**B. FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNPAT, EPODOC, WPI, CNKI, IEEE: 卫星, 导航, 数据, 标识, 权重, 权值, 观测值, 特征向量, 伪距, 周跳, satellite, navigation, data, GNSS, identifier, weight, observation, vector, pseudo range, cycle slip

**C. DOCUMENTS CONSIDERED TO BE RELEVANT**

| Category* | Citation of document, with indication, where appropriate, of the relevant passages | Relevant to claim No. |
|---|---|---|
| A | CN 113467250 A (ZHEJIANG ZHONGYU COMMUNICATION TECHNOLOGY CO., LTD.) 01 October 2021 (2021-10-01) claims 1-9, and description, paragraphs [0126]-[0212] | 1-24 |
| A | CN 106199659 A (WUHAN UNIVERSITY) 07 December 2016 (2016-12-07) entire document | 1-24 |
| A | CN 107356947 A (INSTITUTE OF GEODESY & GEOPHYSICS, CHINESE ACADEMY OF SCIENCES) 17 November 2017 (2017-11-17) entire document | 1-24 |
| A | CN 110309780 A (INSTITUTE OF REMOTE SENSING AND DIGITAL EARTH, CHINESE ACADEMY OF SCIENCES) 08 October 2019 (2019-10-08) entire document | 1-24 |
| A | CN 109874112 A (HUAWEI TECHNOLOGIES CO., LTD.) 11 June 2019 (2019-06-11) entire document | 1-24 |
| A | US 2014253375 A1 (TRIMBLE NAVIGATION LTD.) 11 September 2014 (2014-09-11) entire document | 1-24 |

☐ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 September 2022** | **27 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/142813**

| Patent document cited in search report | | | Publication date (day/month/year) | Patent family member(s) | Publication date (day/month/year) |
|---|---|---|---|---|---|
| CN | 113467250 | A | 01 October 2021 | None | |
| CN | 106199659 | A | 07 December 2016 | None | |
| CN | 107356947 | A | 17 November 2017 | None | |
| CN | 110309780 | A | 08 October 2019 | None | |
| CN | 109874112 | A | 11 June 2019 | None | |
| US | 2014253375 | A1 | 11 September 2014 | None | |

Form PCT/ISA/210 (patent family annex) (January 2015)